# DEMANDE DE BREVET EUROPEEN

(11) **EP 4 814 639 A1**
(43) Date de publication de la demande: **30.09.2026**
(21) Numéro de dépôt: 26166418.9
(22) Date de dépôt: 20.03.2026
(51) Int. Cl.: G05D 1/00, B64D 17/02

(54) **SYSTÈME D ASSISTANCE DE VOL POUR PARAPENTE**

(30) Priorité: 24.03.2025 FR 2503019
(71) Demandeur: JB Chandelier, 05100 Briançon (FR)
(72) Inventeur: CHANDELIER, Jean-Baptiste, 05100 BRIANÇON (FR); PIERRE-BES, Thomas, 05200 EMBRUN (FR)
(74) Mandataire: Plasseraud IP

(57) **Abrégé**

L'invention concerne un système d'assistance de vol (40) pour parapente (100), comportant :
- un ensemble d'élévateurs, chaque élévateur étant respectivement relié à un ensemble de suspentes primaires d'une aile (80) d'un parapente (100),
- un ensemble de capteurs (5-1,5-2,5-3) de tension mécanique, chaque capteur (5-1,5-2,5-3) de tension mécanique mesurant respectivement une tension mécanique dans une suspente primaire (2A-1,2A-2,2A-3) d'un premier élévateur (1A),
- un actionneur (7) configuré pour exercer une force de traction sur au moins un deuxième élévateur (1C) distinct du premier élévateur (1A),
- une unité électronique de contrôle (20) configurée pour détecter une perte de tension mécanique dans au moins une suspente primaire du premier élévateur (1A) et pour commander l'actionneur (7) en réponse à une détection de perte de tension mécanique, de façon à exercer une traction mécanique sur au moins un deuxième élévateur (1C) distinct du premier élévateur (1A).

## Description

### Domaine technique

La présente invention se rapporte au domaine des engins volants non motorisés, tel que les parapentes.

Un parapente comprend une aile souple formant une surface générant une portance et permettant le vol. Un parapente comprend aussi une sellette formant un harnais de maintien pour le pilote. La sellette est reliée à l'aile souple par une série de lignes réparties longitudinalement le long d'une corde de l'aile, et transversalement selon la largeur de l'aile. Le pilote peut contrôler manuellement certaines lignes de façon à déformer le profil de l'aile pour modifier les paramètres de vol, comme la direction de vol, ou le compromis entre la portance et la trainée générée par l'aile.

### Technique antérieure

Lorsque la direction relative du vent par rapport à l'aile sort d'une plage acceptable, il peut se produire une fermeture de l'aile, c'est-à-dire que l'aile souple perd la forme lui permettant d'assurer la portance nécessaire au vol. Il s'en suit une perte d'altitude, qui peut dans certains cas être brutale, et un risque de perte de contrôle.

Le pilote doit alors réagir et actionner des commandes de frein reliées au bord de fuite de l'aile. Cette action sur les freins permet, si elle est suffisamment bien exécutée, de réouvrir l'aile et retrouver des conditions de vol normale.

Même si une fermeture de l'aile est un évènement relativement banal pour un pilote expérimenté, elle peut s'avérer particulièrement délicate pour un pilote moins expérimenté. En effet, la correction nécessaire pour sortir d'une phase de fermeture demande une action rapide sur les freins, et l'amplitude de cette action doit être bien dosée. Une action tardive risque de conduire à une perte de contrôle et potentiellement à un accident. De même, une correction de trop grande amplitude peut compromettre la stabilité du vol. Sans être allés jusqu'à l'accident, de nombreux pilotes se déclarent stressés lors des vols, en raison du risque constant de fermeture de l'aile souple.

Il existe ainsi un besoin de fournir des systèmes d'assistance pour parapente, permettant de réduire voire d'éliminer le risque de fermeture de l'aile, afin d'améliorer la sécurité des pilotes de parapente.

### Résumé

Dans ce but, il est proposé un système d'assistance de vol pour parapente, le système d'assistance de vol comportant :
- un ensemble d'élévateurs, chaque élévateur étant configuré pour être respectivement relié à un ensemble de suspentes primaires d'une aile d'un parapente,
- un ensemble de capteurs de tension mécanique, chaque capteur de tension mécanique étant configuré pour mesurer respectivement une tension mécanique dans une suspente primaire d'un premier élévateur,
- un actionneur configuré pour exercer une force de traction sur au moins un deuxième élévateur, le deuxième élévateur étant distinct du premier élévateur,
- une unité électronique de contrôle configurée pour détecter une perte de tension mécanique dans au moins une suspente primaire de l'ensemble de suspentes primaires du premier élévateur et pour commander l'actionneur en réponse à une détection de perte de tension dans ladite au moins une suspente primaire de l'ensemble de suspentes primaires du premier élévateur, de façon à exercer une traction mécanique sur au moins le deuxième élévateur.

Lorsqu'une fermeture de l'aile du parapente se produit, ou est sur le point de se produire, la tension mécanique devient nulle dans au moins une des suspentes primaires de l'élévateur contrôlant les suspentes les plus proches du bord d'attaque de l'aile. Ces suspentes sont généralement désignées par le terme 'suspentes A' ou 'lignes A'. Ainsi, une détection de perte de tension mécanique dans au moins une des suspentes A indique qu'une fermeture de l'aile se produit, ou est sur le point de se produire. Une commande de l'actionneur permet d'apporter une action corrective sur les commandes de vol, sous la forme d'une force de traction appliquée sur au moins l'élévateur contrôlant les suspentes les plus proches du bord de fuite de l'aile. Cette force de traction permet de modifier le profil de l'aile, ce qui permet d'augmenter l'angle d'attaque, encore appelé angle d'incidence, et retrouver de la portance. Une fermeture de l'aile peut ainsi être évitée, et un vol normal peut être rétabli. L'action corrective peut être réalisée plus rapidement que ce qu'un pilote moyen peut réaliser. La sécurité du pilote est ainsi améliorée.

Les caractéristiques listées dans les paragraphes suivant peuvent être mises en oeuvre indépendamment les unes des autres ou selon toutes les combinaisons techniquement possibles :

Le parapente peut être un parapente de vol libre, ou un paramoteur.

L'aile du parapente comprend un bord d'attaque et un bord de fuite. Le premier élévateur est l'élévateur relié aux suspentes adjacentes au bord d'attaque de l'aile.

Le bord de fuite de l'aile est relié à une commande F de frein, la commande de frein pouvant déformer le bord de fuite de l'aile afin d'en accroitre la trainée aérodynamique. Le deuxième élévateur, sur lequel la traction est exercée par l'actionneur, est distinct de la commande reliée aux freins de l'aile.

Le deuxième élévateur, sur lequel la traction est exercée par l'actionneur, est l'élévateur relié aux suspentes adjacentes aux suspentes de frein de l'aile.

Selon un mode de réalisation du système d'assistance de vol, l'actionneur est un actionneur électrique comprenant :
- un moteur électrique comprenant un arbre de sortie,
- un mécanisme de transformation de mouvement, mécaniquement lié à l'arbre de sortie du moteur électrique,
- un câble d'actionnement mécaniquement lié au mécanisme de transformation de mouvement, le mécanisme de transformation de mouvement étant configuré pour transformer une rotation du moteur électrique en une traction du câble d'actionnement.

Selon un exemple de réalisation, le mécanisme de transformation du mouvement comprend une roue entrainée par le moteur électrique, la roue étant configurée pour recevoir le câble d'actionnement lors d'un enroulement du câble d'actionnement autour de la roue.

La roue peut être en prise directe avec un arbre de sortie du moteur électrique.

Une première portion du câble d'actionnement est liée à la roue. Par exemple, une première extrémité du câble d'actionnement est liée à la roue.

Une deuxième portion du câble d'actionnement est liée au deuxième élévateur. Par exemple, une deuxième extrémité du câble d'actionnement est liée au deuxième élévateur.

Selon un mode de réalisation, l'actionneur comprend un moyen de rappel élastique configuré pour ramener le mécanisme de transformation de mouvement en position de repos.

Selon un autre mode de réalisation, le mécanisme de transformation de mouvement de l'actionneur est configuré pour revenir en position de repos sous l'action de la traction exercée par les suspentes du deuxième élévateur sur le câble d'actionnement.

Autrement dit, l'actionneur est dépourvu de moyen de rappel élastique permettant de ramener le mécanisme de transformation de mouvement en position de repos.

Le mécanisme de transformation de mouvement peut ainsi être plus simple et plus léger.

Le moteur électrique de l'actionneur peut être commandé selon un unique sens de rotation.

Dans ce cas, l'unité électronique de contrôle peut comprendre un étage de commande du moteur électrique particulièrement simple, ce qui réduit le cout du système.

En variante, le moteur électrique de l'actionneur peut être commandé selon deux sens de rotation opposés.

Autrement dit, le moteur électrique peut fournir un couple mécanique selon un sens de rotation correspond à l'établissement d'une traction sur le câble d'actionnement, ainsi que selon le sens de rotation opposé, correspondant à un retour en position de repos.

En variante, un autre type d'actionneur peut être utilisé. Par exemple, un actionneur électropneumatique peut être employé.

Selon un mode de réalisation, le système d'assistance de vol comporte une sellette configurée pour être reliée à chaque élévateur de l'ensemble d'élévateurs,
et l'actionneur est configuré pour être fixé à la sellette du parapente.

L'actionneur est configuré pour exercer une force de traction maximale sur le deuxième élévateur comprise entre 300 Newtons et 600 Newtons.

L'unité électronique de contrôle est configurée pour limiter le couple du moteur électrique à une valeur maximale prédéterminée.
La valeur maximale prédéterminée dépend par exemple du poids du pilote.

Le câble d'actionnement de l'actionneur est mobile entre une position de repos et une position de déplacement maximal. La course maximale de déplacement du câble d'actionnement est comprise entre 100 millimètres et 250 millimètres.

La durée de passage de la position de repos à la position de déplacement maximal est comprise entre 300 millisecondes et 800 millisecondes.

La durée maximale entre une détection de perte de tension mécanique dans au moins une suspente primaire du premier élévateur et une commande de l'actionneur en réponse à cette détection de perte de tension est inférieure à 300 millisecondes.

Ces caractéristiques permettent au système d'assistance de vol d'apporter une correction aux commandes de vol beaucoup plus rapide que ce qu'un pilote, même expert, peut réaliser.

Le système d'assistance de vol comporte une batterie de stockage d'énergie électrique, configurée pour fournir une énergie électrique à l'unité électronique de contrôle.

La batterie est configurée pour fournir une énergie électrique au moteur électrique de l'actionneur.

La batterie est configurée pour être fixée à une sellette du parapente.

L'unité électronique de contrôle est configurée pour être fixée à une sellette du parapente.

Les capteurs de tension mécanique peuvent être identiques.

Selon un mode de réalisation du système d'assistance de vol, chaque capteur de tension mécanique est un capteur analogique délivrant un signal électrique continu.

Selon un exemple de réalisation du système d'assistance de vol, l'unité électronique de contrôle est configurée pour détecter une perte de tension mécanique dans la au moins une suspente primaire de l'ensemble de suspentes primaires du premier élévateur en réponse à un passage au-dessous d'un premier seuil prédéterminé du signal du capteur de tension mécanique de ladite au moins une suspente primaire.

En variante ou de manière complémentaire, l'unité électronique de contrôle est configurée pour déterminer une vitesse de variation du signal de chaque capteur de tension mécanique, et est configurée pour détecter une perte de tension mécanique dans la au moins une suspente primaire de l'ensemble de suspentes primaires du premier élévateur en réponse à un passage au-dessous d'un deuxième seuil prédéterminé de la vitesse de variation du signal du capteur de tension mécanique de ladite au moins une suspente primaire.

Selon un mode de réalisation du système d'assistance de vol, chaque capteur de tension mécanique est un capteur à seulement deux états électriques.

Selon un exemple de réalisation du système d'assistance de vol, l'unité électronique de contrôle est configurée pour détecter une perte de tension mécanique dans la au moins une suspente primaire de l'ensemble de suspentes primaires du premier élévateur en réponse à un passage en réponse à un passage du signal du capteur de tension mécanique de ladite au moins une suspente primaire d'un premier état électrique à un deuxième état électrique.

Selon un mode de réalisation du système d'assistance de vol, le capteur de tension mécanique comprend :
- une première borne de connexion électrique,
- une deuxième borne de connexion électrique,
- un interrupteur mobile entre :
   -- une première position dit position de fermeture dans laquelle la première borne et la deuxième borne sont reliées électriquement l'une à l'autre, et
   -- une deuxième position dit position d'ouverture dans laquelle la première borne et la deuxième borne sont isolées électriquement l'une de l'autre,
- un organe élastique configuré pour appliquer à l'interrupteur une force de maintien dans la deuxième position,
- un poussoir mobile mécaniquement lié à l'interrupteur,

dans lequel le poussoir mobile est configuré pour être en contact avec une suspente primaire du premier élévateur,
et le poussoir mobile est configuré pour passer de la deuxième position à la première position en réponse à une augmentation de la tension mécanique dans la suspente primaire du premier élévateur.

Le poussoir mobile est configuré pour passer de la première position à la deuxième position en réponse au passage de la tension mécanique dans la suspente primaire du premier élévateur au-dessous d'un seuil prédéterminé.

Le poussoir mobile est configuré pour se déplacer linéairement selon une direction transverse à la direction de la suspente primaire du premier élévateur.

L'organe élastique est par exemple un ressort hélicoïdal.

Le ressort hélicoïdal et le poussoir mobile sont par exemple coaxiaux.

Selon un exemple de réalisation, le capteur de tension mécanique comprend un boitier comprenant un logement de réception d'une suspente primaire du premier élévateur, le logement comportant :
- un premier canal de passage de la suspente primaire du premier élévateur, et
- un deuxième canal de passage de la suspente primaire du premier élévateur,
dans lequel l'interrupteur mobile est disposé dans le logement de réception de la suspente primaire.

Le premier canal et le deuxième canal sont par exemple coaxiaux, d'axe.

Le poussoir mobile est configuré pour se déplacer linéairement selon une direction sensiblement perpendiculaire à l'axe du premier canal et du deuxième canal.

Selon un mode de réalisation du système d'assistance de vol, l'unité électronique de contrôle est configurée pour maintenir la commande de l'actionneur jusqu'à ce qu'une course maximale de déplacement de l'actionneur soit atteinte, tant qu'une perte de tension est détectée dans ladite au moins une suspente primaire de l'ensemble de suspentes primaires du premier élévateur.

Selon une variante de réalisation du système d'assistance de vol, l'unité électronique de contrôle est configurée pour désactiver la commande de l'actionneur dès que la course maximale de l'actionneur est atteinte.

La durée d'intervention du système d'assistance de vol est ainsi brève, ce qui rend le système peu intrusif pour le pilote.

Selon une autre variante du système d'assistance de vol, l'unité électronique de contrôle est configurée pour :
- maintenir la commande de l'actionneur pendant une durée prédéterminée une fois que la course maximale de l'actionneur est atteinte, et pour :
- désactiver la commande de l'actionneur à l'expiration de la durée prédéterminée.

Selon un mode de réalisation du système d'assistance de vol, l'unité électronique de contrôle est configurée pour désactiver la commande de l'actionneur si une tension mécanique est détectée dans chaque suspente primaire du premier élévateur, et si la course de déplacement de l'actionneur est inférieure à la course maximale de déplacement de l'actionneur.

Lorsque l'ensemble de capteurs de tension mécanique indiquent que toutes les suspentes primaires sont tendues, cela indique que la fermeture de l'aile a cessé. Il n'est donc plus nécessaire d'apporter une action corrective aux commandes effectuées par le pilote. L'actionneur est désactivé sans délai, de façon à rendre au pilote un contrôle total des commandes. La durée d'intervention du système d'assistance de vol est ainsi limitée au maximum, afin de perturber le pilote le moins possible.

Selon un mode de réalisation, le système d'assistance de vol comporte un dispositif de mouflage. Le dispositif de mouflage comporte :
- une première poulie reliée au premier élévateur,
- une deuxième poulie reliée au troisième élévateur,
- une corde reliant un premier point d'attache disposé sur le troisième élévateur à un deuxième point d'attache disposé sur le deuxième élévateur, dans lequel un chemin de passage de la corde comprend successivement le premier point d'attache, la première poulie, la deuxième poulie, et le deuxième point d'attache,

dans lequel le câble d'actionnement relie l'actionneur au deuxième élévateur,
de façon à ce que l'actionneur exerce une traction mécanique conjointement sur le deuxième élévateur et le troisième élévateur.

En agissant sur les deux élévateurs les plus proches des freins, la déformation de l'aile est mieux répartie qu'en agissant uniquement sur un seul élévateur. L'efficacité est améliorée, et l'action corrective est plus progressive, ce qui est plus sécurisant pour le pilote.

Selon un mode de réalisation du système d'assistance de vol, l'unité électronique de contrôle est configurée pour émettre un premier signal d'alerte en réponse à une détection de perte de tension dans ladite au moins une suspente primaire de l'ensemble de suspentes primaires du premier élévateur.

Le premier signal d'alerte est par exemple un signal sonore.

Le premier signal d'alerte est par exemple un signal visuel affiché sur un afficheur tête-haute.

Selon un mode de réalisation, l'unité électronique de contrôle est configurée pour émettre un deuxième signal d'alerte conjointement à une activation de l'actionneur.

Le deuxième signal d'alerte est par exemple un signal sonore.

Le deuxième signal d'alerte diffère du premier signal d'alerte.

Le deuxième signal d'alerte, sonore, diffère du premier signal d'alerte en tonalité, et/ou en intensité sonore, et/ou en durée.

Le système d'assistance de vol comprend un haut-parleur, et l'unité électronique de contrôle est configurée pour contrôler le haut-parleur.

Le haut-parleur peut être externe à l'unité électronique de contrôle, ou intégré à l'unité électronique de contrôle.

Le deuxième signal d'alerte est par exemple un signal visuel affiché sur un afficheur tête-haute.

Le deuxième signal d'alerte, visuel ; diffère du premier signal d'alerte en couleur, et/ou en emplacement dans l'afficheur tête haute, et/ou en intensité lumineuse, et/ou en pictogramme affiché.

Le système d'assistance de vol peut comporter un interrupteur de désactivation.

Le système peut ainsi être désactivé par le pilote, par exemple lors de la phase de décollage. En effet, durant cette phase une perte de tension dans une suspente n'indique pas une fermeture de l'aile, et il est préférable de ne pas activer l'actionneur.

Le système d'assistance de vol peut comporter un capteur de mesure de vitesse, et le système d'assistance de vol peut rester désactivé tant que la vitesse mesurée n'est pas passée au moins une fois au-dessus d'un seuil prédéterminé.

Le système d'assistance de vol peut comporter un capteur de force configuré pour détecter une force exercée par le pilote sur la sellette, et le système d'assistance de vol peut rester désactivé tant que la force détectée est inférieure à un seuil prédéterminé.

L'établissement d'une force stable et d'un niveau suffisamment élevé sur la sellette indique que l'installation du pilote dans la sellette est terminée, et que son poids s'applique sur la sellette. Ce critère permet de détection que la phase de décollage a été réalisée, et est terminée.

L'unité électronique de contrôle du système d'assistance de vol est configurée pour détecter un défaut de fonctionnement du système d'assistance de vol si chaque capteur de tension mécanique détecte respectivement une perte de tension mécanique dans une suspente primaire du premier élévateur pendant une durée supérieure à un seuil prédéfini.

Le seuil prédéfini est par exemple compris entre 1,5 seconde et 5,0 secondes.
Une détection de manque de tension dans les suspentes primaires pendant une durée anormalement longue n'est pas cohérente avec une phase de vol réelle. Une telle détection anormalement longue indique un problème de mesure. Le système d'assistance de vol est ainsi capable de réaliser une fonction d'auto-diagnostique de son fonctionnement.

L'unité électronique de contrôle du système d'assistance de vol est configurée pour désactiver l'actionneur en réponse à une détection de défaut de fonctionnement.

En cas de défaut de mesure de la force de tension dans les suspentes, il est préférable d'inhiber le fonctionnement du système d'assistance de vol, plutôt qu'apporter des corrections intempestives. L'actionneur est ainsi désactivé.

L'unité électronique de contrôle du système d'assistance de vol est configurée pour émettre un signal d'alerte en réponse à une détection de défaut de fonctionnement.
Le signal d'alerte est par exemple l'allumage d'un voyant visible par le pilote.
Le signal d'alerte peut aussi être un signal sonore.

Selon un mode de réalisation, le système d'assistance de vol comporte une batterie de stockage d'énergie électrique, configurée pour fournir une énergie électrique à l'unité électronique de contrôle et au moteur électrique de l'actionneur,
et comporte un boitier de réception configuré pour recevoir la batterie, l'actionneur et l'unité électronique de contrôle.

Le boitier de réception est configuré pour être fixé à la sellette.

Le boitier de réception est par exemple un sac souple.

L'invention se rapporte également à un ensemble comportant :
- une sellette,
- un premier système d'assistance de vol tel que décrit précédemment,
- un deuxième système d'assistance de vol tel que décrit précédemment.

Selon un mode de réalisation, le premier système d'assistance de vol et le deuxième système d'assistance de vol sont totalement indépendants.

L'installation des systèmes d'assistance de vol est ainsi facilitée.

Selon un autre mode de réalisation, le premier système d'assistance de vol et le deuxième système d'assistance de vol utilisent une même batterie et une même unité électronique de contrôle.

Autrement dit, l'un des systèmes d'assistance de vol comprend un ensemble d'élévateurs, un ensemble de capteurs de tension mécanique, un actionneur, une unité électronique de contrôle et une batterie.

L'autre système d'assistance de vol comprend seulement un ensemble d'élévateurs, un ensemble de capteurs de tension mécanique, et un actionneur.

Certains composants peuvent être mutualisés, le cout du système peut ainsi être diminué.

L'invention se rapporte également à un parapente, comprenant :
- une aile comportant un bord d'attaque et un bord de fuite,
- une sellette,
- un système d'assistance de vol tel que décrit précédemment,
dans lequel :
- chaque élévateur de l'ensemble d'élévateurs du système d'assistance de vol relie la sellette à l'aile,
- chaque capteur de l'ensemble de capteurs de tension mécanique est configuré pour mesurer une tension mécanique dans une suspente primaire adjacente au bord d'attaque de l'aile, et
- l'actionneur est configuré pour exercer une force de traction sur l'élévateur relié aux suspentes primaires adjacentes au bord de fuite de l'aile.
Le parapente peut être un parapente de vol libre, ou un paramoteur.

Selon un mode de réalisation, le parapente comprend un deuxième système d'assistance de vol tel que décrit précédemment. Le deuxième système d'assistance de vol comporte un deuxième ensemble d'élévateurs, un deuxième ensemble de capteurs de tension mécanique, un deuxième actionneur, et :
- chaque élévateur du deuxième ensemble d'élévateurs du deuxième système d'assistance de vol relie la sellette à l'aile,
- chaque capteur du deuxième ensemble de capteurs de tension mécanique est configuré pour mesurer une tension mécanique dans une suspente primaire adjacente au bord d'attaque de l'aile, et
- le deuxième actionneur est configuré pour exercer une force de traction sur l'élévateur relié aux suspentes primaires adjacentes au bord de fuite de l'aile.

De préférence, le deuxième système d'assistance de vol est identique au premier système d'assistance de vol.

Selon un mode de réalisation du parapente, l'aile comprend quatre rangées de points d'attache répartis longitudinalement le long du profil de l'aile.

La première rangée est adjacente au bord d'attaque de l'aile.

La deuxième rangée est comprise entre la première rangée et le bord de fuite de l'aile.

La troisième rangée est comprise entre la deuxième rangée et le bord de fuite de l'aile.

La quatrième rangée est adjacente au bord de fuite de l'aile, et correspond à une commande de frein.

Selon ce mode de réalisation, le parapente comprend trois élévateurs et une commande de frein.
Chaque point d'attache de la quatrième rangée est relié à une ligne de commande de frein de l'aile. Chaque point d'attache de la première rangée est relié à une suspente du premier élévateur. Chaque point d'attache de la deuxième rangée est relié à une suspente du deuxième élévateur. Chaque point d'attache de la troisième rangée est relié à une suspente du troisième élévateur.

Selon un autre mode de réalisation, l'aile comprend cinq rangées de points d'attache répartis longitudinalement le long du profil de l'aile.

Dans ce cas, le parapente comprend quatre élévateurs et une commande de frein de l'aile. Autrement dit, dans ce cas l'aile comprend un élévateur supplémentaire de chaque côté de la nacelle.

Selon encore un autre mode de réalisation, l'aile comprend trois rangées de points d'attache répartis longitudinalement le long du profil de l'aile.

Dans ce cas, le parapente comprend seulement deux élévateurs et une commande de frein de l'aile.

La commande de frein est distincte des élévateurs. Le nombre d'élévateurs peut varier selon l'aile employée. Une commande de frein est présente quelque soit le nombre d'élévateurs.

L'invention concerne également un procédé d'utilisation d'un système d'assistance de vol tel que décrit précédemment,
dans lequel chaque capteur de tension mécanique est configuré pour mesurer respectivement une tension mécanique dans une suspente primaire d'un premier élévateur relié à un premier ensemble de suspentes adjacentes à un bord d'attaque d'une aile d'un parapente,
et dans lequel l'actionneur est configuré pour exercer une force de traction sur au moins un deuxième élévateur relié à un deuxième ensemble de suspentes, le deuxième ensemble de suspentes étant adjacent au premier ensemble de suspentes.

### Brève description des dessins

D'autres caractéristiques, détails et avantages apparaîtront à la lecture de la description détaillée ci-après, et à l'analyse des dessins annexés, sur lesquels :
- La figure 1 est une vue schématique d'un parapente,
- La figure 2 est une vue schématique de face d'un parapente équipé d'un système d'assistance de vol selon un mode de réalisation de l'invention,
- La figure 3 est une vue schématique de profil du parapente de la figure 2,
- La figure 4 est une série de vues schématiques de profil illustrant le fonctionnement du système d'assistance de vol selon l'invention,
- La figure 5 est une vue schématique partielle d'un mode de réalisation d'un système d'assistance de vol selon l'invention,
- La figure 6 est une vue schématique d'un capteur de tension mécanique intégré à un mode de réalisation d'un système d'assistance de vol selon l'invention,
- La figure 7 est une vue schématique partielle d'un mode de réalisation d'un système d'assistance de vol selon l'invention,
- La figure 8 est une vue générale d'un parapente équipé d'un système d'assistance de vol selon un mode de réalisation de l'invention,
- La figure 9 représente une série de courbes d'évolution temporelle de paramètres illustrant le fonctionnement d'un mode de réalisation du système d'assistance de vol selon l'invention,
- La figure 10 représente une autre série de courbes d'évolution temporelle de paramètres illustrant le fonctionnement d'un mode de réalisation du système d'assistance.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

Dans la description qui suit, l'expression " un premier élément en amont d'un deuxième élément " signifie que le premier élément est placé avant le deuxième élément par rapport au sens de circulation, ou de parcours, d'un fluide. De manière analogue, le terme " un premier élément en aval d'un deuxième élément " signifie que le premier élément est placé après le deuxième élément par rapport au sens de circulation, ou de parcours, du fluide considéré. Dans le cas du circuit de fluide réfrigérant, le terme « un premier élément est en amont d'un deuxième élément » signifie que le fluide réfrigérant parcourt successivement le premier élément, puis le deuxième élément, sans passer par le dispositif de compression. Autrement dit, le fluide réfrigérant sort du dispositif de compression, traverse éventuellement ou plusieurs éléments, puis traverse le premier élément, puis le deuxième élément, puis regagne le dispositif de compression, éventuellement après avoir traversé d'autres éléments.

L'expression « un deuxième élément est placé entre un premier élément et un troisième élément » signifie que le plus court trajet pour passer du premier élément au troisième élément ou du troisième élément au premier élément passe par le deuxième élément.

Quand il est précisé qu'un sous-système comporte un élément donné, cela n'exclut pas la présence d'autres éléments dans ce sous-système.

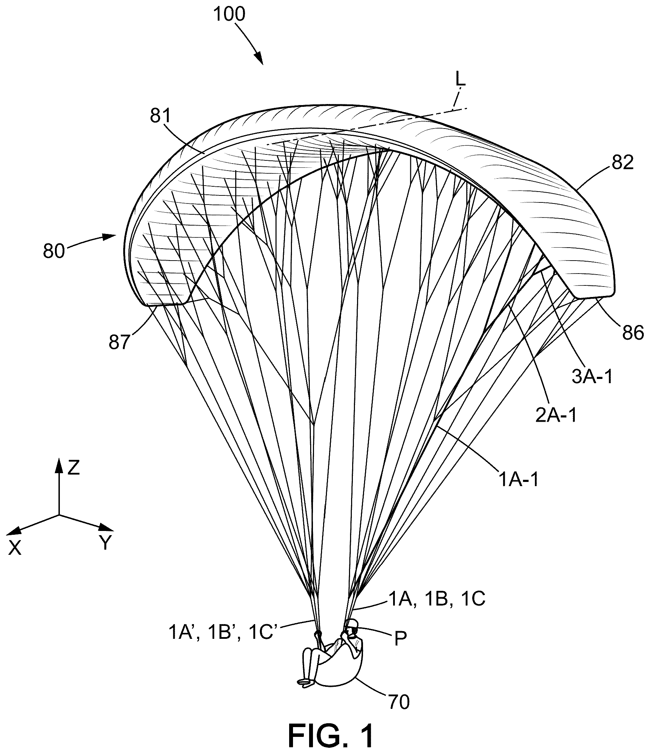

On a représenté sur la figure 1 un parapente 100.
Le parapente 100 comprend :
- une aile 80,
- une sellette 70 dans laquelle un pilote P est installé, et
- un ensemble de suspentes reliant la sellette 70 à l'aile. La structure de cet ensemble de suspentes sera détaillée ci-dessous.

L'aile 80 du parapente 100 comprend un bord d'attaque 81 et un bord de fuite 82. L'aile 80 est souple. L'aile 80 est formée dans un matériau textile.
L'aile 80 comprend un intrados 83 et un extrados 84. L'intrados 83 et l'extrados 84 sont reliés par des parois verticales, qui délimitent une série de caissons 85 dans lequel l'air peut circuler lorsque le parapente 100 est en situation de vol. En situation de vol, l'écoulement de l'air dans les caissons 85 permet de maintenir la forme de l'intrados et de l'extrados, autrement dit de maintenir un profil N permettant d'assurer une portance.
L'aile 80 est reliée à la sellette 70 par un ensemble de suspentes. L'aile 80 comprend un ensemble de points d'attache permettant de fixer les différentes suspentes.

Sur les différentes figures, l'axe Z est l'axe vertical, orienté vers le haut.
L'axe X est l'axe longitudinal, c'est-à-dire l'axe formant la direction avant-arrière. L'axe X est orienté dans la direction vers laquelle le pilote, désigné par le signe P, est dirigé.
L'axe Y est l'axe transversal, c'est-à-dire formant la direction gauche-droite. L'axe Y est orienté de la droite vers la gauche, tel que vu par le pilote P lorsqu'il est installé dans la sellette 70.

La répartition des points d'attache des suspentes sur l'aile 80 peut varier suivant le modèle de l'aile.

Sur le parapente de la figure 1, l'aile comprend quatre rangées de points d'attache répartis longitudinalement le long du profil N de l'aile 80.

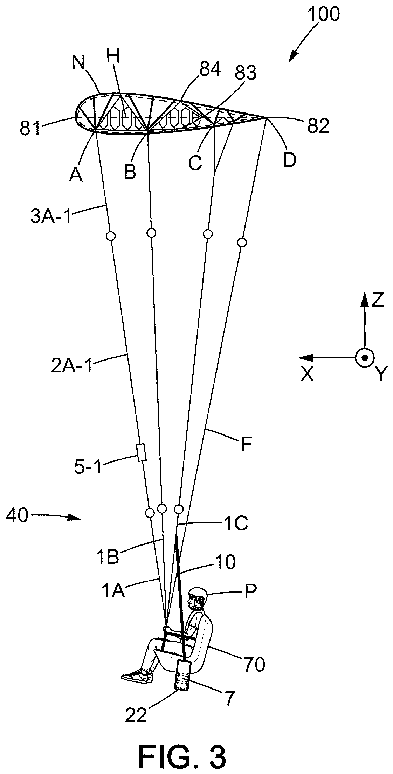

Sur le parapente de la figure 3, l'aile comprend quatre rangées A,B,C,D de points d'attache répartis longitudinalement le long du profil N de l'aile 80.
La première rangée A est adjacente au bord d'attaque 81 de l'aile 80.
La deuxième rangée B est comprise entre la première rangée A et le bord de fuite 82 de l'aile 80. La troisième rangée C est comprise entre la deuxième rangée B et le bord de fuite 82 de l'aile 80. La quatrième rangée D est adjacente au bord de fuite 82 de l'aile 80, et correspond aux points d'attache de la commande de frein F.
Autrement dit, comme représenté sur la figure 3 qui est une vue de profil, on trouve successivement dans cet ordre le long du profil N de l'intrados 83 : le bord d'attaque 81, la première rangée A, la deuxième rangée B, la troisième rangée C, la quatrième rangée D, et le bord de fuite 82.

Selon cet exemple, le parapente 100 comprend trois élévateurs 1A, 1B, 1C et une commande de frein F.
Chaque point d'attache de la quatrième rangée D est relié à une ligne de commande de frein F de l'aile 80.
Chaque point d'attache de la première rangée A est relié à une suspente du premier élévateur 1A. Chaque point d'attache de la deuxième rangée B est relié à une suspente du deuxième élévateur 1B.
Chaque point d'attache de la troisième rangée C est relié à une suspente du troisième élévateur 1C.

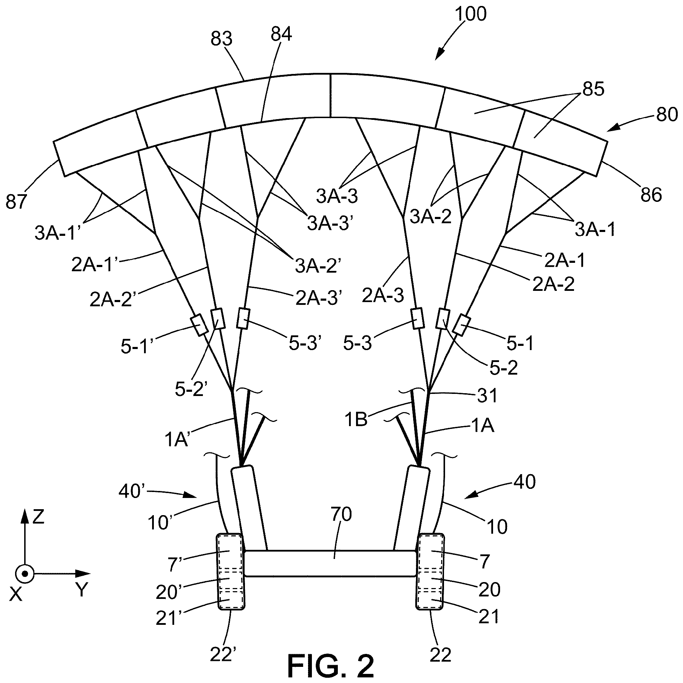

La figure 2, qui est une vue de face, illustre un seul élévateur 1A dans son intégralité afin de simplifier la représentation. Seule une portion des élévateurs 1B, 1C est représentée.
Chaque élévateur forme un câble unique non ramifié. Chaque élévateur est relié à un ensemble de suspente primaires. Ici, chaque élévateur est relié ainsi à trois suspentes primaires.
Chaque suspente primaire se divise en un ensemble de suspentes secondaires. Sur l'exemple illustré, chaque suspente primaire se divise en deux suspentes secondaires.
Chaque suspente secondaire se divise à son tour, ici en deux suspentes tertiaires.
Les suspentes tertiaires sont attachées à l'aile 80. Les suspentes tertiaires sont réparties transversalement le long de l'aile, depuis une extrémité latérale de l'aile jusqu'à l'axe longitudinal de l'aile.
Sur l'exemple illustré, l'élévateur 1A est relié à trois suspentes primaires 2A-1, 2A-2, 2A-3. La suspente primaire 2A-1 se divise en deux suspentes secondaires 3A-1. La suspente primaire 2A-2 se divise en deux suspentes secondaires 3A-2, et la suspente primaire 2A-3 se divise en deux suspentes secondaires 3A-1. Les suspentes tertiaires n'ont pas été représentées pour simplifier la figure.
Ainsi, chaque élévateur se ramifie, en trois étapes successives, en douze suspentes tertiaires, formant une rangée sensiblement parallèle à l'axe transversal Y de l'aile 80.

Dans certains modèles de parapentes, non représentés, une suspente tertiaire peut aussi se diviser à son tour, par exemple en deux suspentes quaternaires.

Chaque élévateur est relié, suite à plusieurs ramifications successives, à une rangée de suspentes tertiaires. Les différentes rangées sont réparties le long du profil N de l'aile 80. Par convention, la première rangée A est la rangée la plus proche du bord d'attaque 81, et la dernière rangée est la rangée la plus proche du bord de fuite 82.
L'aile peut comprendre, suivant les modèles, une, deux ou trois rangées intermédiaires. La ou les rangées intermédiaires sont disposées le long du profil entre la première rangée et la dernière rangée. Autrement dit, l'aile peut comporter, selon les modèles, trois rangées de suspentes tertiaires réparties le long de son profil, quatre rangées, ou bien cinq rangées.

Chaque élévateur comprend à une de ses extrémités une boucle permettant le passage d'un mousqueton de fixation à la sellette.
Un même mousqueton permet de fixer à la sellette tous les élévateurs d'un ensemble d'élévateurs. L'ensemble d'élévateurs est également désigné par le terme 'groupe d'élévateurs'.

Chaque élévateur comprend à l'autre de ses extrémités une boucle permettant le passage d'un mousqueton 31 de fixation aux suspentes primaires.
Un même mousqueton 31 permet de fixer toutes les suspentes primaires à un élévateur.

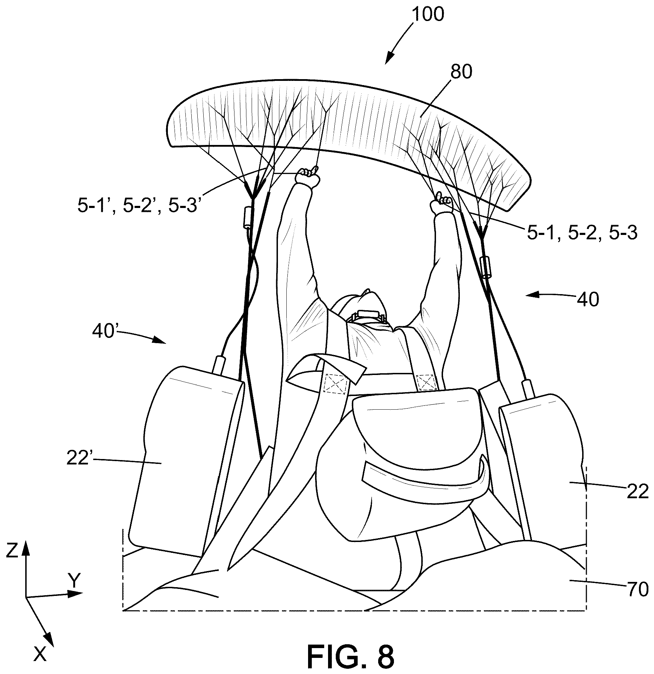

Le parapente 100 comprend deux ensembles d'élévateurs, ou groupes d'élévateurs. Un premier ensemble d'élévateurs est fixé à la sellette 70 du côté gauche de l'emplacement du pilote P, et un deuxième ensemble est fixé à la sellette 70 du côté droit de l'emplacement du pilote P.
Sur la figure 1, l'ensemble d'élévateurs situés sur le côté gauche de la sellette 70 sont désignés par les signes 1A, 1B, 1C. L'ensemble d'élévateurs situés sur le côté droit de la sellette 70 sont désignés par les signes 1A', 1B', 1C'.
Les orientations 'gauche' et 'droite' correspondent à la gauche et à la droite du pilote P lorsque celui-ci est installé dans la sellette 70, en position nominale de vol, comme illustré notamment sur la figure 1 et sur la figure 8.
Le premier ensemble d'élévateurs 1A, 1B, 1C est relié à la moitié gauche de l'aile 80, et le deuxième groupe d'élévateurs 1A', 1B', 1C' est relié à la moitié droite de l'aile 80.
Le premier ensemble d'élévateurs 1A, 1B, 1C est relié à la partie de l'aile comprise entre un premier bord latéral et l'axe longitudinal L de l'aile 80. Le deuxième ensemble d'élévateurs 1A', 1B', 1C' est relié à la partie de l'aile comprise entre l'axe longitudinal L de l'aile 80 et le deuxième bord latéral, dans le cas de l'exemple le bord droit 87.

L'aile 80 est symétrique par rapport à son axe longitudinal L.
En absence de mouvement de roulis, le parapente 100 est symétrique par rapport à un plan vertical passant par l'axe longitudinal L, autrement dit le plan formé par les axes L, Z.

Selon un mode de réalisation, illustré sur la figure 3, l'aile 80 comprend quatre rangées A, B, C, D de points d'attache répartis longitudinalement le long du profil N de l'aile 80.
Dans ce cas, le parapente 100 comprend trois élévateurs 1A, 1B, 1C et une commande de frein F de l'aile 80.
Autrement dit, dans ce cas l'aile 80 comprend un élévateur de moins de chaque côté de la nacelle 80.

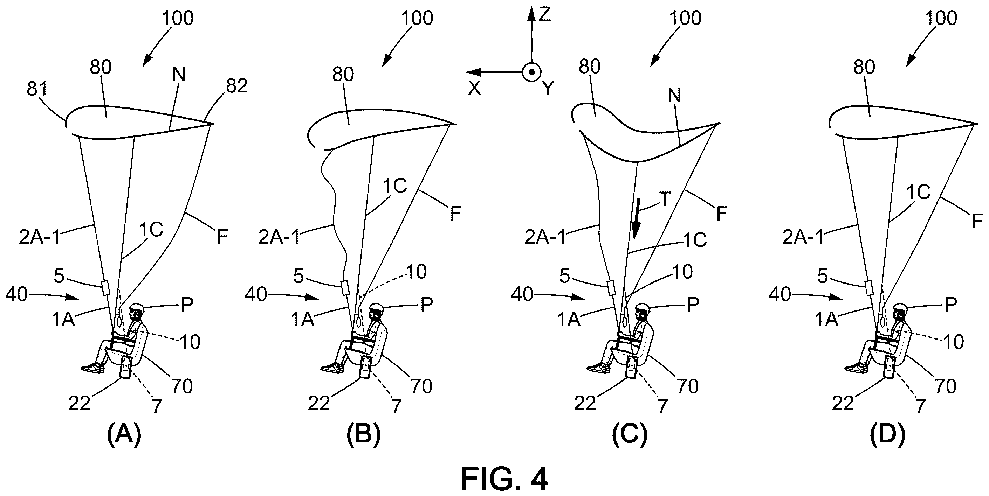

Selon un autre mode de réalisation, illustré sur la figure 4, l'aile 80 comprend trois rangées A, B, C de points d'attache répartis longitudinalement le long du profil N de l'aile 80.
Dans ce cas, le parapente 100 comprend seulement deux élévateurs 1A, 1B et une commande de frein de l'aile 80.

Durant le vol, l'écoulement de l'air dans les caissons 85 permet de maintenir le profil de l'aile 80, ce profil défini par son intrados 84 et son extrados 83 assurant une portance permettant le vol. Lorsque l'angle d'attaque, c'est-à-dire l'angle entre la direction d'écoulement de l'air et la direction de la corde H du profil, est trop faible, l'écoulement de l'air dans les caissons 85 peut devenir insuffisant pour maintenir le profil N. La partie avant de la voile 80, c'est-à-dire proche du bord d'attaque 81, peut se déformer et se refermer.
Une fermeture peut concerner une partie de la voile, ou toute la voile.
La portance assurée par la voile 80 diminue, et l'altitude du parapente 100 peut diminuer brutalement. Cette phase est dangereuse et peut être difficile à gérer pour le pilote.

Il est ainsi proposé un système d'assistance de vol 40 pour parapente 100.
Le système d'assistance de vol 40 comporte :
- un ensemble d'élévateurs 1A,1B,1C, chaque élévateur 1A,1B,1C étant configuré pour être respectivement relié à un ensemble de suspentes primaires 2A-1, 2A-2, 2A-3 ;2B-1,2B-2,2B-3;3B-1,3B-2,3B-3 d'une aile 80 d'un parapente 100,
- un ensemble de capteurs 5-1,5-2,5-3 de tension mécanique, chaque capteur 5-1,5-2,5-3 de tension mécanique étant configuré pour mesurer respectivement une tension mécanique dans une suspente primaire 2A-1,2A-2,2A-3 d'un premier élévateur 1A,
- un actionneur 7 configuré pour exercer une force de traction sur au moins un deuxième élévateur 1C, le deuxième élévateur 1C étant distinct du premier élévateur 1A,
- une unité électronique de contrôle 20 configurée pour détecter une perte de tension mécanique dans au moins une suspente primaire de l'ensemble de suspentes primaires 2A-1,2A-2,2A-3 du premier élévateur 1A et pour commander l'actionneur 7 en réponse à une détection de perte de tension dans ladite au moins une suspente primaire de l'ensemble de suspentes primaires 2A-1, 2A-2, 2A-3 du premier élévateur 1A, de façon à exercer une traction mécanique sur au moins le deuxième élévateur 1C.

Chacun des capteurs 5-1,5-2,5-3 de tension mécanique fournit un signal de mesure à l'unité électronique de contrôle 20. En analysant en temps réel les différents signaux de mesure, l'unité électronique de contrôle 20 peut déterminer que la tension mécanique mesurée par au moins un des capteurs est nulle. Dès que cette perte de tension mécanique est détectée, l'unité électronique de contrôle 20 active la commande de l'actionneur 7 afin d'appliquer une traction mécanique sur au moins le deuxième élévateur 1C.
Le cas où un seul capteur détecte une perte de tension mécanique dans la suspente primaire correspondante correspond à une fermeture partielle de l'aile.
Dans le cas d'une fermeture totale de l'aile, tous les capteurs de tension mécanique mesurent une tension mécanique nulle.

La figure 4 illustre schématiquement le fonctionnement du système d'assistance de vol proposé.
Sur la partie A de la figure 4, le vol est normal.
Lorsqu'une fermeture de l'aile 80 d'un parapente 100 se produit, ou est sur le point de se produire, la tension mécanique devient nulle dans au moins une des suspentes primaires de l'élévateur contrôlant les suspentes les plus proches du bord d'attaque 81 de l'aile 80. Ces suspentes sont généralement désignées par le terme 'suspentes A' ou 'lignes A'. Ainsi, la détection d'une perte de tension mécanique dans au moins une des suspentes A indique qu'une fermeture de l'aile se produit, ou est sur le point de se produire. Cette phase est représentée sur la partie B de la figure 4, où la suspente primaire 2A-1 n'est plus tendue.
Suite à cette détection de manque de force de tension dans la suspente primaire 2A-1, l'actionneur 7 est commandé et exerce une traction sur le deuxième élévateur, désigné par le signe 1C. Cette traction est indiquée par la flèche T.
Sur la partie C de la figure 4, le déclenchement de l'actionneur 7 permet d'apporter une action corrective sur les commandes de vol, sous la forme d'une traction T exercée sur au moins le deuxième élévateur 1C contrôlant les suspentes les plus proches du bord de fuite 82 de l'aile 80. Cette traction T permet de modifier le profil N de l'aile 80, comme illustré sur la partie C, ce qui permet de retrouver de la portance. Une fermeture de l'aile 80 peut ainsi être stoppée, et un vol normal peut être rétabli, comme c'est le cas sur la partie D de la figure 4.
L'action corrective apportée par le système d'assistance de vol 40 peut être réalisée plus rapidement que ce qu'un pilote moyen, ou même chevronné, peut réaliser. La sécurité du pilote est ainsi améliorée.

Le premier élévateur 1A est l'élévateur relié aux suspentes adjacentes au bord d'attaque 81 de l'aile 80.
On entend, par suspentes adjacentes au bord d'attaque, les suspentes les plus proches du bord d'attaque.
Le bord de fuite 82 de l'aile 80 est relié à une commande F de frein, la commande F de frein pouvant déformer le bord de fuite 82 de l'aile 80 afin d'en accroitre la trainée aérodynamique.
Le deuxième élévateur 1C, sur lequel la traction est exercée par l'actionneur 7, est distinct de la commande F reliée aux freins de l'aile 80.
Le deuxième élévateur 1C, sur lequel la traction est exercée par l'actionneur 7, est l'élévateur relié aux suspentes adjacentes aux suspentes de frein de l'aile 80.
On entend par adjacentes les suspentes les plus proches des freins, le long du profil N de l'aile.

Selon l'exemple illustré du système d'assistance de vol 40, l'actionneur 7 est un actionneur électrique comprenant :
- un moteur électrique 8 comprenant un arbre de sortie,
- un mécanisme 9 de transformation de mouvement, mécaniquement lié à l'arbre de sortie du moteur électrique 8,
- un câble d'actionnement 10 mécaniquement lié au mécanisme 9 de transformation de mouvement, le mécanisme 9 de transformation de mouvement étant configuré pour transformer une rotation du moteur électrique 8 en une traction du câble d'actionnement 10.

Le moteur électrique 8 entraine en rotation un élément du mécanisme 9 de transformation de mouvement, ce qui permet un enroulement progressif d'une partie du câble d'actionnement 10, ce qui permet de déplacer l'extrémité du câble non liée au mécanisme 9 de transformation de mouvement. Ce déplacement permet de réaliser un mouvement de traction.
Le mécanisme 9 de transformation de mouvement comprend par exemple un réducteur.
Sur la figure 4, le câble d'actionnement 10 est en pointillés lorsqu'aucun effort de traction n'est appliqué par l'actionneur 7, et est en traits pleins lorsqu'une traction T est appliquée.

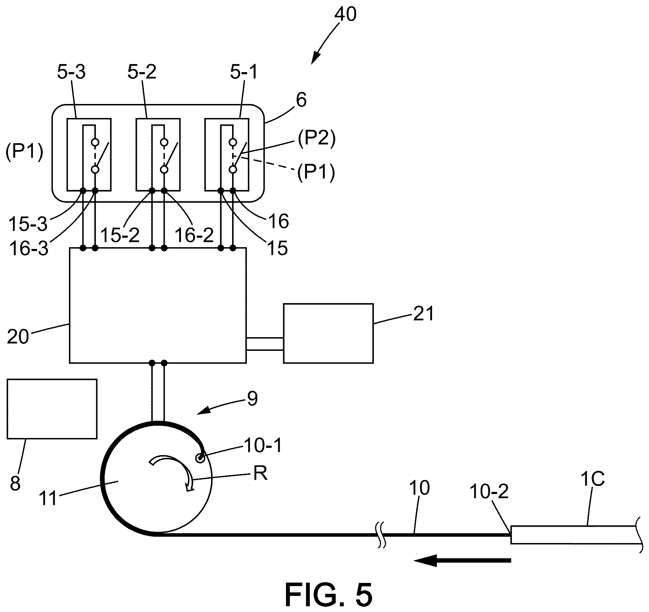

Selon l'exemple illustré, notamment sur la figure 5, le mécanisme 9 de transformation du mouvement comprend une roue 11 entrainée par le moteur électrique 8, la roue 11 étant configurée pour recevoir le câble d'actionnement 10 lors d'un enroulement du câble d'actionnement 10 autour de la roue 11.
La roue 11 comprend par exemple une gorge pouvant recevoir le câble d'actionnement 10 et guider celui-ci lors de son enroulement et son déroulement.

La roue 11 est ici en prise directe avec un arbre de sortie du moteur électrique 8.
Autrement dit, le mécanisme 9 de transformation du mouvement ne comprend pas de réducteur.

Une première portion du câble d'actionnement 10 est liée à la roue 11.Par exemple, une première extrémité 10-1 du câble d'actionnement 10 est liée à la roue 11.
Une deuxième portion du câble d'actionnement 10 est liée au deuxième élévateur 1C. Par exemple, une deuxième extrémité 10-2 du câble d'actionnement 10 est liée au deuxième élévateur 1C.

L'actionneur 7 peut comprendre un moyen de rappel élastique, non représenté, configuré pour ramener le mécanisme 9 de transformation de mouvement en position de repos.

En variante, le mécanisme 9 de transformation de mouvement de l'actionneur 7 est configuré pour revenir en position de repos sous l'action de la traction exercée par les suspentes du deuxième élévateur 1C sur le câble d'actionnement 10.
Autrement dit, l'actionneur 7 est dépourvu de moyen de rappel élastique permettant de ramener le mécanisme 9 de transformation de mouvement en position de repos. La tension exercée par les suspentes reliées au câble d'actionnement 10 sur ce câble d'actionnement 10 ramène naturellement le mécanisme 9 de transformation de mouvement à sa position de repos lorsque le moteur électrique 8 n'est plus commandé.
Le mécanisme 9 de transformation de mouvement peut ainsi être plus simple et plus léger que lorsqu'un moyen de rappel élastique est incorporé à ce mécanisme 9.

Le moteur électrique 8 peut être un moteur à courant continu.
Le moteur électrique 8 peut, en variante, être un moteur sans balai.

Le moteur électrique 8 de l'actionneur 7 peut être commandé selon un unique sens de rotation. Ainsi, le moteur est commandé seulement lorsqu'une traction doit être effectuée par l'actionneur 7. Le retour à la position de repos de l'actionneur 7 est assurée par le moyen de rappel élastique, lorsque celui-ci est présent, ainsi que par la force de tension présente dans les suspentes primaires, une fois qu'un vol normal a été rétabli. Dans ce cas, l'unité électronique de contrôle 20 peut comprendre un étage de commande du moteur électrique particulièrement simple, ce qui réduit le cout du système.

En variante, le moteur électrique 8 de l'actionneur 7 peut être commandé selon deux sens de rotation opposés.
Dans ce cas, le moteur électrique 8 peut fournir un couple mécanique dans chaque sens de rotation : le sens de rotation correspond à l'établissement d'une traction sur le câble d'actionnement 10, et le sens de rotation opposé, qui correspondant à un retour en position de repos après une intervention du système.

Selon des variantes non représentées, un autre type d'actionneur peut être utilisé. Par exemple, un actionneur électropneumatique peut être employé.

Le système d'assistance de vol 40 comporte une sellette 70 configurée pour être reliée à chaque élévateur de l'ensemble d'élévateurs 1A,1B,1C,
et l'actionneur 7 est configuré pour être fixé à la sellette 70 du parapente 100.

Ainsi, le poids du pilote P installé dans la sellette 70 permet de maintenir l'actionneur 7, la force exercée par l'actionneur 7 provoque ainsi un raccourcissement du deuxième élévateur 1C, de là une modification du profil N de l'aile 80.

L'actionneur 7 est configuré pour exercer une force de traction maximale sur le deuxième élévateur 1C comprise entre 300 Newtons et 600 Newtons.

L'unité électronique de contrôle 20 est par exemple configurée pour limiter le couple du moteur électrique 8 à une valeur maximale prédéterminée.
Cette valeur maximale prédéterminée du couple mécanique pouvant être fourni par le moteur électrique 8 dépend par exemple du poids du pilote.
L'unité électronique de contrôle 20 peut comprendre un paramètre programmable prenant en compte le poids du pilote.

Le câble d'actionnement 10 de l'actionneur 7 est mobile entre une position de repos et une position de déplacement maximal.
La distance entre la position de repos et la position de déplacement maximal correspond à la course maximale de déplacement.
La course maximale de déplacement du câble d'actionnement 10 est comprise entre 100 millimètres et 250 millimètres.
Dans l'exemple de la figure 5, la course maximale de déplacement du câble d'actionnement 10 correspond à la course de déplacement maximal de l'extrémité 10-2 du câble 10.

La durée de passage de la position de repos à la position de déplacement maximal est comprise entre 300 millisecondes et 800 millisecondes.
La durée maximale entre une détection de perte de tension mécanique dans au moins une suspente primaire du premier élévateur 1A et une commande de l'actionneur 7 en réponse à cette détection de perte de tension est inférieure à 300 millisecondes.
Ces plages de valeurs permettent au système d'assistance de vol 40 d'apporter une correction aux commandes de vol beaucoup plus rapide que ce qu'un pilote peut réaliser, même lorsque ce pilote est un expert.

Le système d'assistance de vol 40 comporte une batterie 21 de stockage d'énergie électrique, configurée pour fournir une énergie électrique à l'unité électronique de contrôle 20.
La batterie 21 est configurée pour fournir une énergie électrique au moteur électrique 8 de l'actionneur 7.
La batterie 21 est configurée pour être fixée à une sellette 70 du parapente 100.
De même, l'unité électronique de contrôle 20 est configurée pour être fixée à une sellette 70 du parapente 100.

Selon l'exemple illustré, le système d'assistance de vol 40 comporte une batterie 21 de stockage d'énergie électrique, configurée pour fournir une énergie électrique à l'unité électronique de contrôle 20 et au moteur électrique 8 de l'actionneur 7,
et comporte un boitier de réception 22 configuré pour recevoir la batterie 21, l'actionneur 7 et l'unité électronique de contrôle 20.

Le boitier de réception 22 est configuré pour être fixé à la sellette 70.
Le boitier de réception 22 est par exemple un sac souple, comme représenté sur la figure 8.
Le boitier de réception 22 comprend plusieurs compartiments, chaque compartiment étant configuré pour recevoir un élément parmi la batterie 21, l'actionneur 7 et l'unité électronique de contrôle 20.

Le boitier de réception 22 assure le maintien de la batterie 21, de l'actionneur 7 et de l'unité électronique de contrôle 20, et assure leur protection contre les chocs et les éléments, tel que la pluie.
Les différents éléments peuvent être sortis du boitier de réception 22 lors d'une phase de préparation du vol, afin notamment de recharger la batterie 21 et vérifier le bon fonctionnement des différents éléments avant un vol.

Les capteurs de tension mécanique 5-1,5-2,5-3 peuvent être identiques.
Les capteurs de tension mécanique 5-1,5-2,5-3 peuvent être intégrés dans un sous-ensemble 6 permettant une intégration mécanique. Autrement dit, l'ensemble des capteurs est intégré dans un boitier commun.
L'installation des capteurs de tension mécanique est ainsi facilitée.

Selon un mode de réalisation du système d'assistance de vol 40, chaque capteur 5-1,5-2,5-3 de tension mécanique est un capteur analogique délivrant un signal électrique continu.
On entend par signal électrique continu un signal pouvant prendre toutes les valeurs d'une plage de mesure, c'est-à-dire toutes les valeurs comprises entre une valeur minimale de mesure et une valeur maximale de mesure.
Par exemple, la tension électrique de sortie de chaque capteur est proportionnelle à la contrainte mécanique reçue par ce capteur, qui est représentative de la tension mécanique de la suspente primaire sur laquelle le capteur est installé.

L'unité électronique de contrôle 20 est configurée pour détecter une perte de tension mécanique dans la au moins une suspente primaire de l'ensemble de suspentes primaires 2A-1,2A-2,2A-3 du premier élévateur 1A en réponse à un passage au-dessous d'un premier seuil prédéterminé du signal du capteur de tension mécanique de ladite au moins une suspente primaire. Le seuil est choisi proche de zéro, ainsi une action corrective peut être déclenchée dès que la tension mécanique dans la suspente est presque nulle.

En variante ou de manière complémentaire, l'unité électronique de contrôle 20 est configurée pour déterminer une vitesse de variation du signal de chaque capteur de tension mécanique 5-1,5-2,5-3, et est configurée pour détecter une perte de tension mécanique dans la au moins une suspente primaire de l'ensemble de suspentes primaires 2A-1,2A-2,2A-3 du premier élévateur 1A en réponse à un passage au-dessous d'un deuxième seuil prédéterminé de la vitesse de variation du signal du capteur de tension mécanique de ladite au moins une suspente primaire.
Une vitesse de variation élevée, ici une vitesse de décroissance élevée, indique que la tension mécanique est sur le point de s'annuler.
La vitesse de variation du signal plutôt que la valeur brute du signal peut être utilisée comme critère de déclenchement de l'action corrective sur les commandes de vol.

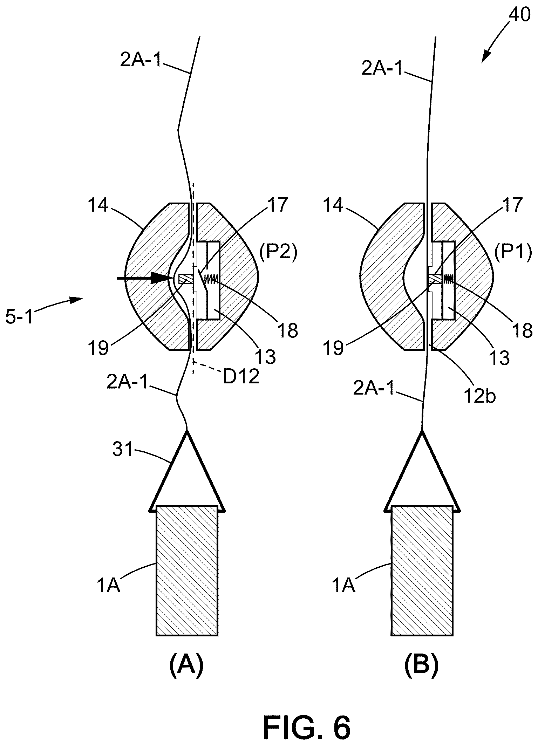

Selon l'exemple illustré, notamment sur la figure 5 et la figure 6, chaque capteur 5-1,5-2,5-3 de tension mécanique est un capteur à seulement deux états électriques.
L'utilisation de capteurs de ce type permet de réduire le cout des capteurs, et permet aussi simplifier le traitement du signal.

Autrement dit, chaque capteur 5-1,5-2,5-3 de tension mécanique est un capteur tout ou rien, encore désigné par le terme Anglais « On/Off ». Le signal de sortie de chaque capteur 5-1,5-2,5-3 peut prendre seulement deux valeurs distinctes.
Dans un premier état E1, le capteur est fermé et permet un passage de courant électrique.
Dans un deuxième état E2, le capteur est ouvert et empêche le passage de courant électrique.

Selon l'exemple illustré du système d'assistance de vol 40, l'unité électronique de contrôle 20 est configurée pour détecter une perte de tension mécanique dans la au moins une suspente primaire de l'ensemble de suspentes primaires 2A-1,2A-2,2A-3 du premier élévateur 1A en réponse à un passage en réponse à un passage du signal du capteur de tension mécanique 5-1 de ladite au moins une suspente primaire d'un premier état électrique E1 à un deuxième état électrique E2.

Comme schématisé sur la figure 5, le capteur de tension mécanique 5-1 comprend ainsi:
- une première borne 15 de connexion électrique,
- une deuxième borne 16 de connexion électrique.
Le capteur de tension mécanique 5-1 comprend un interrupteur 17 mobile entre :
-- une première position P1 dit position de fermeture dans laquelle la première borne 15 et la deuxième borne 16 sont reliées électriquement l'une à l'autre, et
-- une deuxième position P2 dit position d'ouverture dans laquelle la première borne 15 et la deuxième borne 16 sont isolées électriquement l'une de l'autre.
Comme schématisé sur la figure 6, le capteur de tension mécanique 5-1 comprend un organe élastique 18 configuré pour appliquer à l'interrupteur 17 une force de maintien dans la deuxième position P2.
Le capteur de tension mécanique 5-1 comprend un poussoir mobile 19 mécaniquement lié à l'interrupteur 17. Le poussoir mobile 19 est configuré pour être en contact avec une suspente primaire 2A-1 du premier élévateur 1A,
et le poussoir mobile 19 est configuré pour passer de la deuxième position P2 à la première position P1 en réponse à une augmentation de la tension mécanique dans la suspente primaire 2A-1 du premier élévateur 1A.

Le poussoir mobile 19 est configuré pour passer de la première position P1 à la deuxième position P2 en réponse au passage de la tension mécanique dans la suspente primaire 2A-1 du premier élévateur 1A au-dessous d'un seuil prédéterminé.
Le poussoir mobile 19 est configuré pour rester dans la première position P1 tant que la tension mécanique dans la suspente primaire 2A-1 du premier élévateur 1A reste supérieure au seuil prédéterminé.

Le poussoir mobile 19 est configuré pour se déplacer linéairement selon une direction transverse à la direction de la suspente primaire 2A-1 du premier élévateur 1A.

L'organe élastique 18 est ici un ressort hélicoïdal.
L'organe élastique 18 est monté précontraint.
Le ressort hélicoïdal 18 et le poussoir mobile 19 sont par exemple coaxiaux.

Comme on peut le voir sur la figure 6, le capteur de tension mécanique 5-1 comprend un boitier 14 comprenant un logement 13 de réception d'une suspente primaire 2A-1 du premier élévateur 1A. Le logement 13 comporte :
- un premier canal 12a de passage de la suspente primaire 2A-1 du premier élévateur 1A, et
- un deuxième canal 12b de passage de la suspente primaire 2A-1 du premier élévateur 1A,
et l'interrupteur mobile 17 est disposé dans le logement 13 de réception de la suspente primaire 2.

Le premier canal 12a et le deuxième canal 12b sont coaxiaux, d'axe D12.
Le poussoir mobile 19 est configuré pour se déplacer linéairement selon une direction sensiblement perpendiculaire à l'axe D12 du premier canal 12a et du deuxième canal 12b.

Sur la figure 5, les capteurs 5-1, 5-2, 5-3 sont identiques. La première borne de connexion électrique des capteurs 5-2, 5-3 est respectivement désignée par le signe 15-2, 15-3. La deuxième borne électrique des capteurs 5-2, 5-3 est respectivement désignée par le signe 16-2, 16-3.

Sur l'exemple de la figure 5 et de la figure 6, les capteurs 5-1, 5-2, 5-3 sont du type normalement ouvert, c'est-à-dire que leurs bornes de connexion électrique ne sont pas reliées électriquement en absence de contrainte mécanique appliquée. Les bornes de connexion électriques sont reliées électriquement seulement lorsqu'une contrainte mécanique suffisante est appliquée. Les trois capteurs de tension mécanique peuvent être connectés électriquement en parallèle. Dans ce cas, il est possible de savoir pour lequel ou lesquels des capteurs une perte de tension mécanique s'est produite.
Selon une variante non représentée, les trois capteurs de tension mécanique peuvent également être connectés électriquement en série. Une perte de tension mécanique dans n'importe lequel des capteurs provoquent une ouverture du circuit électrique et ainsi un changement d'état électrique du signal. Il est ainsi possible d'utiliser une seule entrée de l'unité électronique.

La figure 6 illustre le fonctionnement d'un capteur 5-1 à seulement deux états électriques.
La partie B de la figure 6 correspond à une phase de vol normal dans laquelle la suspente primaire 2A-1 est tendue. Dans cette situation, la force de tension subie par la suspente primaire 2A-1, c'est-à-dire sa tension mécanique, maintient le poussoir mobile 19 décalé vers la droite, au sens de la figure. Le poussoir mobile 19 maintient l'interrupteur 17 en position fermée, le circuit électrique dont le capteur 5-1 fait partie est ainsi fermé. Le ressort 18 est comprimé, la force de tension de la suspente primaire 2A-1 étant supérieure à la force élastique de rappel appliquée par le ressort 18.

La partie A de la figure 6 correspond à une phase de fermeture au moins partielle de l'aile 80, dans laquelle la suspente primaire 2A-1 est détendue. Autrement dit, la force de tension mécanique exercée sur la suspente primaire 2A-1 est nulle ou négligeable. Dans cette situation, la force exercée par la suspente primaire 2A-1 sur le poussoir mobile 19 est inférieure à la force élastique du ressort 18. Le ressort 18 décale l'interrupteur 17 et le poussoir mobile 19 vers la gauche, au sens de la figure 6. Le circuit électrique dont le capteur 5-1 fait partie est alors ouvert.
Le changement d'état du circuit électrique permet une détection de perte de tension mécanique dans la suspente passant dans le boitier 14 du capteur 5-1.

Selon une variante non représentée, les capteurs 5-1, 5-2, 5-3 peuvent être de type normalement fermé, c'est-à-dire que leurs bornes de connexion électrique sont reliées électriquement lorsque aucune contrainte mécanique n'est appliquée. Le circuit électrique s'ouvre lorsqu'une contrainte mécanique supérieure à un seuil prédéterminé est appliquée.

Selon cette variante de réalisation, le poussoir mobile 19 est configuré pour passer de la première position P1 à la deuxième position P2 en réponse à une augmentation de la tension mécanique dans la suspente primaire 2A-1 du premier élévateur 1A.
Le poussoir mobile 19 est configuré pour passer de la deuxième position P2 à la première position P1 en réponse au passage de la tension mécanique dans la suspente primaire 2A-1 du premier élévateur 1A au-dessous d'un seuil prédéterminé.

L'action corrective apportée par l'actionneur 7 peut être appliquée de différentes manières.

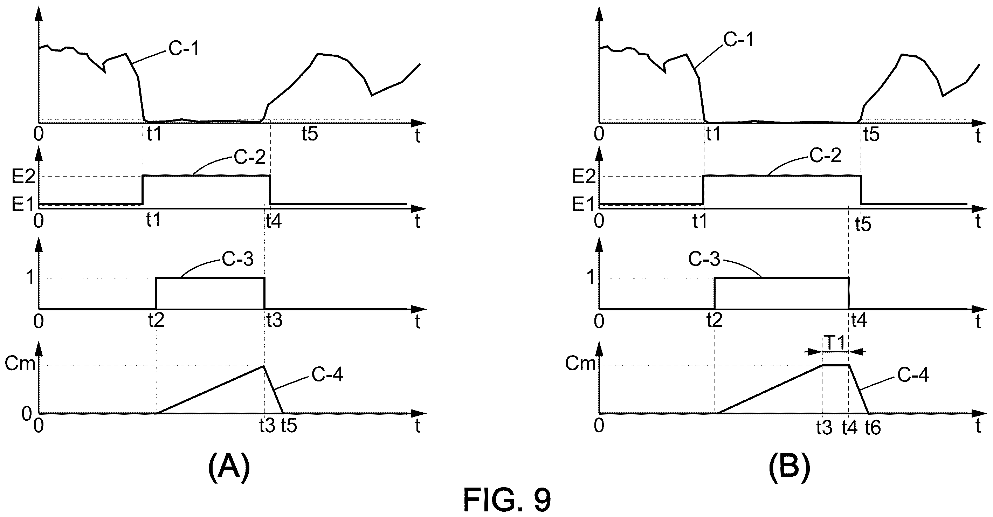

La figure 9 illustre deux commandes possibles de l'actionneur 7.

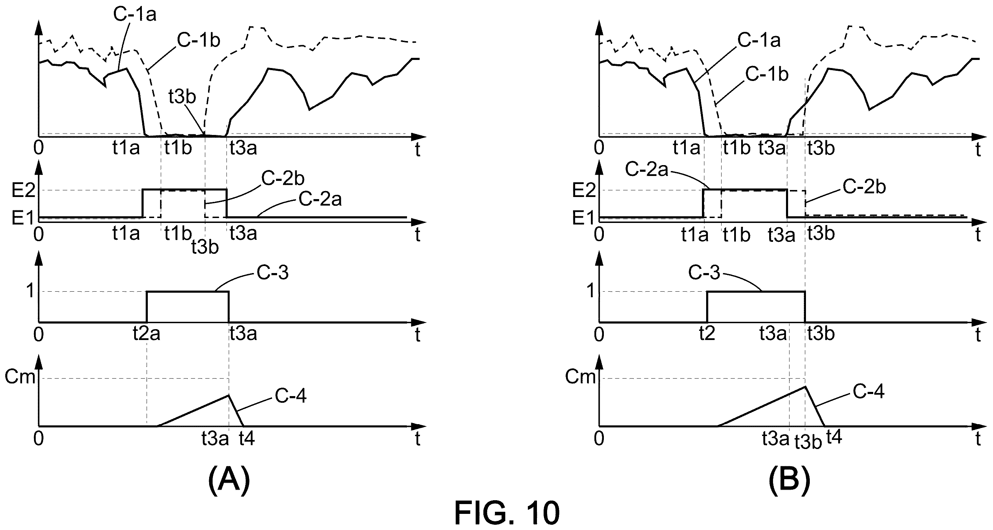

Sur la figure 9 et la figure 10, l'axe des abscisses représente le temps.
La courbe C-1 représente la tension réelle dans une suspente primaire 2A-1.
La courbe C-2 représente l'état électrique du capteur de tension mécanique, qui peut être l'état E1 ou l'état E2.
La courbe C-3 représente l'état de la commande de l'actionneur 7. L'état '0' signifie que l'actionneur 7 est au repos, et l'état '1' signifie que l'actionneur 7 est commandé.
La courbe C-4 représente la position de l'actionneur 7. Cette position peut varier entre la valeur 0, qui est par définition la position de repos, et la valeur Cm, correspondant à la course maximale de l'actionneur 7.
Pour simplifier la figure 9, l'état d'une seule suspente primaire a été tracé.

A l'instant t1, une fermeture au moins partielle de l'aile débute. La tension mécanique sur la suspente primaire 2A-1 chute et prend une valeur sensiblement égale à zéro.
Le capteur 5-1 change d'état électrique, et passe dans le deuxième état électrique E2. La durée de changement d'état est négligée sur la représentation, et on considère que le changement d'état du capteur se produit également à l'instant t1.
A l'instant t2, l'unité électronique de contrôle 20 active l'actionneur 7. L'écart entre l'instant t2 et l'instant t1 correspond à la durée de calcul pour détecter la perte de tension dans la suspente primaire 2A-1.
La position de l'actionneur 7, et en particulier du câble d'actionnement 10, augmente, jusqu'à atteindre à l'instant t3 la position correspondant à la course maximale Cm.
Cette séquence est commune à la partie A et la partie B de la figure 9.

Selon ce mode de réalisation du système d'assistance de vol 40, l'unité électronique de contrôle 20 est configurée pour maintenir la commande de l'actionneur 7 jusqu'à ce qu'une course maximale Cm de déplacement de l'actionneur 7 soit atteinte, tant qu'une perte de tension est détectée dans ladite au moins une suspente primaire de l'ensemble de suspentes primaires 2A-1, 2A-2, 2A-3 du premier élévateur 1A.
La course maximale Cm de l'actionneur 7 correspond à la course maximale du câble d'actionnement 10.

Selon le mode de réalisation illustrée sur la partie A de la figure 9, l'unité électronique de contrôle 20 est configurée pour désactiver la commande de l'actionneur 7 dès que la course maximale de l'actionneur 7 est atteinte.
La durée d'intervention du système d'assistance de vol 40 est ainsi brève, ce qui rend le système d'assistance de vol peu intrusif pour le pilote.

Ainsi, la position de l'actionneur 7 diminue à partir de l'instant t3. A l'instant t5, l'actionneur 7 atteint sa position de repos.
L'action corrective apportée sur les commandes de vol permet de stopper la fermeture de l'aile, et à partir de l'instant t4 une tension est présente dans la suspente primaire 2A-1.
A l'instant t4, le capteur 5-1 repasse dans le premier état électrique E1.

Selon le mode de réalisation du système d'assistance de vol 40 illustré sur la partie B de la figure 9, l'unité électronique de contrôle 20 est configurée pour maintenir la commande de l'actionneur 7 pendant une durée prédéterminée T1 une fois que la course maximale de l'actionneur 7 est atteinte, et pour désactiver la commande de l'actionneur 7 à l'expiration de la durée prédéterminée T1.
La durée prédéterminée T1 vaut par exemple entre 0,3 seconde et 2,0 secondes.

Comme exposé précédemment, la course maximale de l'actionneur 7 est atteinte à l'instant t3. La commande est maintenue jusqu'à l'instant t4, et est désactivée à partir de l'instant t4. Comme pour le cas précédent, la position de l'actionneur 7 diminue à partir de l'instant t4 et l'actionneur 7 atteint sa position de repos à l'instant t6.
L'action corrective apportée sur les commandes de vol permet de stopper la fermeture de l'aile, et à partir de l'instant t5 une tension est présente dans la suspente primaire 2A-1.
A l'instant t5, le capteur 5-1 repasse dans l'état électrique E1, indiquant l'efficacité de l'action corrective.

L'unité électronique de contrôle 20 est de plus configurée pour désactiver la commande de l'actionneur 7 si une tension mécanique est détectée dans chaque suspente primaire 2A-1,2A-2,2A-3 du premier élévateur 1A, et si la course de déplacement de l'actionneur 7 est inférieure à la course maximale de déplacement Cm de l'actionneur 7.

Lorsque les capteurs de tension mécanique indiquent que toutes les suspentes primaires sont tendues, cela indique que la fermeture de l'aile 80 a cessé. Il n'est donc plus nécessaire d'apporter une action corrective aux commandes effectuées par le pilote. L'actionneur 7 est désactivé sans délai, de façon à rendre au pilote un contrôle total des commandes. Autrement dit, l'actionneur 7 est désactivé avant d'avoir atteint sa course maximale de déplacement Cm. La durée d'intervention du système d'assistance de vol 40 est ainsi limitée au maximum, afin de perturber le moins possible le pilote.

Un exemple de cette phase de fonctionnement est illustré sur la figure 10.
Sur cette figure, la tension de deux suspentes primaires 2A-1 et 2A-2 a été représentée. Les courbes C-1a et C-1b représentent la tension réelle dans une première suspente primaire 2A-1 et une deuxième suspente primaire 2A-2.
Les courbes C-2a et C2-b représentent respectivement l'état électrique des capteurs de tension mécanique 5-1, 5-2, correspondant respectivement à la première suspente primaire 2A-1 et la deuxième suspente primaire 2A-2. Chaque capteur 5-1, 5-2 peut être dans l'état électrique E1 ou l'état E2.

Sur la partie A de la figure 10, la tension mécanique exercée sur la suspente primaire 2A-1, courbe C-1a, passe à une valeur sensiblement nulle à l'instant t1a. A cette instant, la tension mécanique exercée sur la suspente primaire 2A-2, courbe C-1b, n'est pas nulle. Cette tension s'annule à l'instant t1b, postérieur à l'instant t1b. Une plus grande partie de l'aile subit une fermeture. Le capteur 5-1 de la suspente primaire 2A-1 change d'état électrique à l'instant t1a, et le capteur 5-2 de la suspente primaire 2A-2 change d'état électrique à l'instant t1b.
Dès que l'un des capteurs change d'état électrique, la commande de l'actionneur 7 est activée et la course de l'actionneur 7 augmente progressivement. Cette activation se produit donc à l'instant t2a. A l'instant t3b, la force de tension dans la suspente primaire 2A-2 est rétablie. La force de tension dans la suspente primaire 2A-1 reste nulle. L'activation de l'actionneur 7 est donc maintenue à l'instant t3b.
A l'instant t3a, la tension dans la suspente primaire 2A-1 est rétablie. Le deuxième capteur 5-2 change d'état électrique, et repasse dans le premier état électrique E1. Comme la tension est rétablie dans les deux suspentes, l'activation de l'actionneur 7 cesse, à l'instant t3a.
A cet instant, l'actionneur 7 n'a pas encore atteint sa course maximale Cm. L'actionneur 7 est désactivé, et le déplacement de l'actionneur 7 diminue, jusqu'à ce que l'actionneur retrouve sa position de repos, à l'instant t4.
La force de tension dans les suspentes contribue à ramener l'actionneur 7 vers sa position de repos.

Sur la partie B de la figure 10, la tension s'annule dans la suspente primaire 2A-1 à l'instant t1a, et la tension s'annule dans la suspente primaire 2A-2 à l'instant t1b.
La tension dans la suspente primaire 2A-1 est rétablie à l'instant t3a. A cet instant, la tension est encore nulle dans la suspente primaire 2A-2. L'activation de l'actionneur 7 est donc maintenue.
La tension dans la suspente primaire 2A-2 est rétablie à l'instant t3b. Comme une tension est alors présente dans toutes les suspentes, l'actionneur 7 est désactivé à partir de l'instant t3b. L'actionneur 7 retrouve sa position de repos à l'instant t4. Lorsque l'actionneur 7 est désactivé, la course maximale Cm n'est pas encore atteinte.

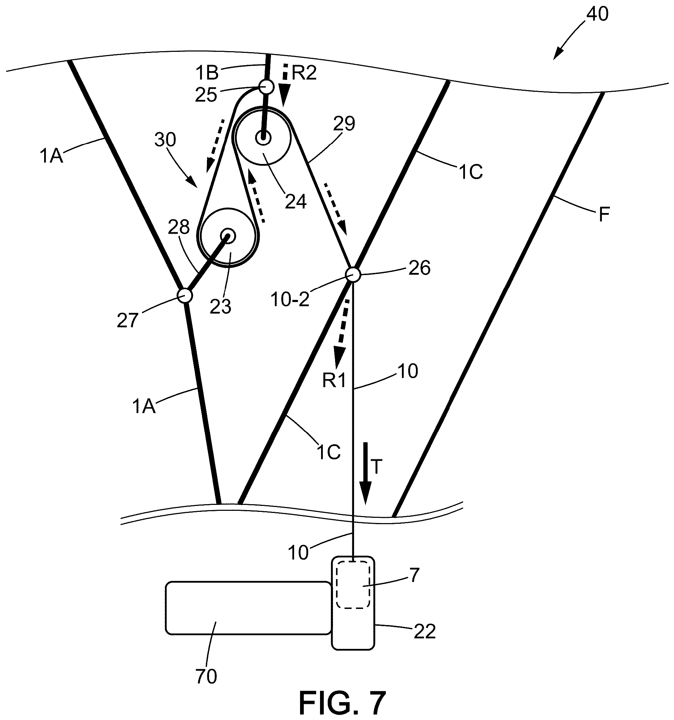

Selon un mode de réalisation, illustré sur la figure 7, le système d'assistance de vol 40 comporte un dispositif de mouflage 30.
Le dispositif de mouflage 30 comporte:
- une première poulie 23 reliée au premier élévateur 1A,
- une deuxième poulie 24 reliée au troisième élévateur 1B,
- une corde 29 reliant un premier point d'attache 25 disposé sur le troisième élévateur 1B à un deuxième point d'attache 26 disposé sur le deuxième élévateur 1C. Un chemin de passage de la corde 29 comprend successivement le premier point d'attache 25, la première poulie 23, la deuxième poulie 24, et le deuxième point d'attache 26.
Le câble d'actionnement 10 relie l'actionneur 7 au deuxième élévateur 1C
de façon à ce que l'actionneur 7 exerce une traction mécanique conjointement sur le deuxième élévateur 1C et le troisième élévateur 1B.

Le troisième élévateur 1B est l'élévateur le plus proche du deuxième élévateur 1C compris entre le bord d'attaque 81 et le deuxième élévateur 1C.
En agissant sur les deux élévateurs 1C, 1B les plus proches des freins, la déformation de l'aile 80 est mieux répartie qu'en agissant uniquement sur un seul élévateur. L'efficacité est améliorée, et l'action corrective est plus progressive, ce qui est plus sécurisant pour le pilote.

Le dispositif de mouflage 30 comprend un lien 28 reliant la première poulie 23 au premier élévateur 1A. Une extrémité du lien 28 est solidaire de la première poulie 23, et l'autre extrémité du lien 28 est solidaire d'un point d'attache 27 disposé sur le premier élévateur 1A. Le lien 28 est par exemple une corde.
Le câble d'actionnement 10 est relié au deuxième élévateur 1C. Pour cela, l'extrémité 10-2 du câble d'actionnement 10 est reliée au deuxième élévateur 1C, par exemple au niveau du deuxième point d'attache 26 de la corde 29.
Autrement dit, le point d'attache du câble d'actionnement 10 sur le deuxième élévateur 1C peut être sensiblement confondu avec le point d'attache de la corde 29 sur le deuxième élévateur 1C.
La corde 29 est reliée au troisième élévateur 1B au niveau du premier point d'attache 25, circule successivement sur la première poulie 23 qui lui fait faire un premier changement de direction de sensiblement 180°, puis sur la deuxième poulie 24 qui lui fait faire un deuxième changement de direction de sensiblement 180°, et est reliée au deuxième élévateur 1C au niveau du deuxième point d'attache 26.
Lorsque l'actionneur 7 est commandé par l'unité électronique de contrôle 20 et réalise une traction sur le câble 10, schématisée par la flèche T en trait plein, l'élévateur 1C subit une traction vers le bas, schématisée par la flèche en traits pointillés R1. La corde 29 est également tirée vers le bas au niveau de son point d'attache 26, et transmet une traction.
Le lien 28 subit une force de traction, et résiste à la traction exercée par la corde 29.
L'élévateur 1B subit ainsi également une traction dirigée vers le bas, au sens de la figure 7. Cette traction dirigée vers le bas subie par le troisième élévateur 1B est schématisée par la flèche en traits pointillés R2.
Ainsi, le profil de l'aile 80 est modifié est agissant sur l'élévateur 1C le plus près du bord de fuite de l'aile 80, et en agissant en même temps sur l'élévateur 1B, qui est l'élévateur voisin de l'élévateur 1C, décalé vers le bord d'attaque de l'aile 80.
L'amplitude du déplacement de l'élévateur 1B est inférieure à l'amplitude du déplacement de l'élévateur 1C. Par exemple, la traction réalisée par l'actionneur 7 fait un déplacement de 15 centimètres de l'élévateur 1C, et un déplacement de 8 centimètres de l'élévateur 1B.
Cette action simultanée sur deux élévateurs 1C, 1B consécutifs permet de modifier l'orientation de l'aile ou son profil, de façon à augmenter l'angle d'incidence de l'aile. Une fermeture de l'aile est ainsi évitée.

Une information est envoyée au pilote pour lui signaler une intervention du système d'assistance de vol 40 lorsque celle-ci se produit.

L'unité électronique de contrôle 20 est configurée pour émettre un premier signal d'alerte en réponse à une détection de perte de tension dans ladite au moins une suspente primaire de l'ensemble de suspentes primaires 2A-1, 2A-2, 2A-3 du premier élévateur 1A.

Ce premier signal d'alerte permet de prévenir le pilote qu'un début de fermeture de l'aile a été détecté, et l'incite à être particulièrement attentif.

Le premier signal d'alerte est par exemple un signal sonore.
Le signal sonore est par exemple une répétition, à intervalles de temps constant, d'une note d'une tonalité donnée.

Le premier signal d'alerte est par exemple un signal visuel affiché sur un afficheur tête-haute.

Selon un mode de réalisation, l'unité électronique de contrôle 20 est configurée pour émettre un deuxième signal d'alerte conjointement à une activation de l'actionneur 7.

Le deuxième type de signal d'alerte permet de prévenir le pilote qu'une intervention du système d'assistance de vol est en cours.
Le deuxième signal d'alerte diffère du premier signal d'alerte.

Le deuxième signal d'alerte est par exemple un signal sonore.

Le deuxième signal d'alerte sonore, diffère du premier signal d'alerte en tonalité, et/ou en intensité sonore, et/ou en durée.
Par exemple, le deuxième signal d'alerte sonore est plus aigu, et d'un niveau sonore plus élevé. L'intervalle de temps entre deux notes émises peut être plus faible que pour le premier signal sonore.

Le système d'assistance de vol 40 comprend un haut-parleur, et l'unité électronique de contrôle 20 est configurée pour contrôler le haut-parleur.
Le haut-parleur peut être externe à l'unité électronique de contrôle 20, ou intégré à l'unité électronique de contrôle 20.

Comme précédemment, le deuxième signal d'alerte peut être un signal visuel affiché sur un afficheur tête-haute.

Le deuxième signal d'alerte visuel diffère du premier signal d'alerte en couleur, et/ou en emplacement dans l'afficheur tête haute, et/ou en intensité lumineuse, et/ou en pictogramme affiché. Par exemple, le deuxième signal d'alerte est plus lumineux, plus grand, et d'une couleur plus facilement visible.

Le système d'assistance de vol 40 peut comporter un interrupteur de désactivation.

Le système peut ainsi être désactivé par le pilote, lorsque les indications fournies par les capteurs de tension mécanique ne sont pas fiables. C'est le cas par exemple lors de la phase de décollage. En effet, durant cette phase une perte de tension dans une suspente n'indique généralement pas une fermeture de l'aile, mais indique d'un vol stable n'est pas encore établi. Il est préférable dans cette phase de ne pas activer l'actionneur 7 afin de laisser un contrôle total au pilote.

Le système d'assistance de vol 40 peut comporter un capteur de mesure de vitesse, et le système d'assistance de vol 40 peut rester désactivé tant que la vitesse mesurée n'est pas passée au moins une fois au-dessus d'un seuil prédéterminé.

Le seuil de vitesse est choisi suffisamment élevé pour que le passage au-dessus de ce seuil indique que la phase de décollage est terminée, et que le vol est établi.

Le système d'assistance de vol 40 peut comporter un capteur de force, non représenté, configuré pour détecter une force exercée par le pilote sur la sellette 70. Le système d'assistance de vol 40 reste désactivé tant que la force détectée est inférieure à un seuil prédéterminé.
L'établissement d'une force stable et d'un niveau suffisamment élevé sur la sellette 70 indique que le poids du pilote s'applique sur la sellette 70, et que l'installation du pilote dans la sellette 70 est terminée. La fin de la phase de décollage peut ainsi être détectée. Comme précédemment, le système d'assistance de vol 40 est activé seulement lorsque la phase de décollage est considérée comme terminée.

Réservoir] L'unité électronique de contrôle 20 du système d'assistance de vol 40 est également configurée pour détecter un défaut de fonctionnement du système d'assistance de vol 40. Par exemple, dans le cas où des capteurs de type normalement ouvert sont utilisés, un défaut de fonctionnement est détecté si chaque capteur 5-1,5-2,5-3 de tension mécanique détecte respectivement une perte de tension mécanique dans une suspente primaire 2A-1,2A-2,2A-3 du premier élévateur 1A pendant une durée supérieure à un seuil prédéfini.
Le seuil prédéfini est par exemple compris entre 1,5 seconde et 5 secondes.
Lorsqu'un manque de tension dans les suspentes primaires est détecté pendant une durée anormalement longue, cela indique que les informations délivrées par les capteurs ne sont pas cohérentes. En effet, il n'est pas possible de maintenir une perte de tension mécanique pendant une durée excédent un certain seuil. Une détection anormalement longue de perte de tension dans les suspentes primaires indique un problème sur la chaine de mesure. Le système d'assistance de vol est ainsi capable de réaliser une fonction d'auto-diagnostique de son fonctionnement.

L'unité électronique de contrôle 20 du système d'assistance de vol 40 est configurée pour désactiver l'actionneur 7 en réponse à une détection de défaut de fonctionnement.
Lorsqu'un défaut de fonctionnement est détecté, il est préférable d'inhiber le fonctionnement du système d'assistance de vol 40, plutôt qu'apporter des corrections intempestives. L'actionneur 7 est ainsi désactivé jusqu'à la fin du vol.

L'unité électronique de contrôle 20 du système d'assistance de vol 40 est configurée pour émettre un signal d'alerte en réponse à une détection de défaut de fonctionnement.
Le signal d'alerte est par exemple l'allumage d'un voyant visible par le pilote.
Le signal d'alerte peut aussi être un signal sonore.
Le pilote est ainsi informé que le système d'assistance de vol est inactif. Le vol peut se poursuivre, mais sans intervention du système d'assistance de vol 40.

Un parapente 100 équipé d'un système d'assistance de vol 40 tel que décrit précédemment, comprend ainsi une aile 80 comportant un bord d'attaque 81 et un bord de fuite 82, une sellette 70, et
- chaque élévateur de l'ensemble d'élévateurs 1A,1B,1C du système d'assistance de vol 40 relie la sellette 70 à l'aile 80,
- chaque capteur 5-1,5-2,5-3 de l'ensemble de capteurs 5-1,5-2,5-3 de tension mécanique est configuré pour mesurer une tension mécanique dans une suspente primaire 2A-1,2A-2,2A-3 adjacente au bord d'attaque 81 de l'aile 80,
- l'actionneur 7 est configuré pour exercer une force de traction sur l'élévateur 1C relié aux suspentes primaires 2C-1,2C-2,2C-3 adjacentes au bord de fuite 82 de l'aile 80.
Selon l'exemple illustré, le parapente 100 est un parapente de vol libre.

Selon un autre exemple d'application, non illustré, le parapente 100 est un paramoteur.
Par rapport à un parapente, un paramoteur comprend un moteur entrainant une hélice. Le moteur est intégré dans une armature portée par le pilote et disposée sur son dos. L'hélice assure une poussée permettant de propulser l'ensemble du paramoteur et de son pilote.
Le fonctionnement du système d'assistance de vol 40 est le même dans le cas d'un parapente de vol libre et dans le cas d'un paramoteur.

Selon l'exemple illustré, le système d'assistance de vol 40 décrit équipe un seul côté du parapente 100.
Le parapente 100 proposé comprend donc deux systèmes d'assistance de vol 40, 40'. Un des systèmes est dédié à la moitié gauche du parapente et l'autre système est dédié à la moitie droite du parapente 100.

Le parapente 100 comprend ainsi un deuxième système d'assistance de vol 40' tel que décrit précédemment. Comme le premier système d'assistance de vol 40, le deuxième système d'assistance de vol 40' comporte un deuxième ensemble d'élévateurs 1A',1B',1C', un deuxième ensemble de capteurs 5-1',5-2',5-3' de tension mécanique, un deuxième actionneur 7', et :
- chaque élévateur du deuxième ensemble d'élévateurs 1A',1B',1C' du deuxième système d'assistance de vol 40' relie la sellette 70 à l'aile 80,
- chaque capteur 5-1',5-2',5-3' du deuxième ensemble de capteurs 5-1',5-2',5-3' de tension mécanique est configuré pour mesurer une tension mécanique dans une suspente primaire 2A-1',2A-2',2A-3' adjacente au bord d'attaque 81 de l'aile 80, et
- le deuxième actionneur 7' est configuré pour exercer une force de traction sur l'élévateur 1C' relié aux suspentes primaires 2C-1',2C-2',2C-3' adjacentes au bord de fuite 82 de l'aile 80.

Le deuxième système d'assistance de vol 40' peut être identique au premier système d'assistance de vol 40.
Le deuxième système d'assistance de vol 40' comprend un câble d'actionnement 10' opérant de la même manière que le câble d'actionnement 10 du premier système d'assistance de vol 40.

Il peut ainsi être fourni un ensemble 90 comportant :
- une sellette 70,
- un premier système d'assistance de vol 40 tel que décrit précédemment,
- un deuxième système d'assistance de vol 40' tel que décrit précédemment.

Selon un mode de réalisation, le premier système d'assistance de vol 40 et le deuxième système d'assistance de vol 40' sont totalement indépendants.
L'installation des systèmes d'assistance de vol est ainsi facilitée.
L'un des systèmes d'assistance de vol 40 est par exemple fixé d'un côté de la nacelle 70, et l'autre système est fixé de l'autre côté de la nacelle 70.

Selon un autre mode de réalisation, le premier système d'assistance de vol 40 et le deuxième système d'assistance de vol 40 utilisent une même unité électronique de contrôle 20.

Autrement dit, l'un des systèmes d'assistance de vol comprend un ensemble d'élévateurs 1A,1B,1C, un ensemble de capteurs 5-1,5-2,5-3 de tension mécanique, un actionneur 7, une unité électronique de contrôle 20 et une batterie 21.
L'autre système d'assistance de vol comprend un ensemble d'élévateurs 1A',1B',1C', un ensemble de capteurs 5-1',5-2',5-3' de tension mécanique, un actionneur 7' et une batterie 21'.

L'unité électronique de contrôle 20 commune peut activer l'actionneur 7' du deuxième système d'assistance de vol 40' par une liaison filaire, ou par une liaison sans fil.

Par exemple, la liaison filaire passe à travers la sellette 70.

Selon un autre mode de réalisation, le premier système d'assistance de vol 40 et le deuxième système d'assistance de vol 40 utilisent une même batterie 21 et une même unité électronique de contrôle 20.

Autrement dit, l'un des systèmes d'assistance de vol comprend un ensemble d'élévateurs 1A,1B,1C, un ensemble de capteurs 5-1,5-2,5-3 de tension mécanique, un actionneur 7, une unité électronique de contrôle 20 et une batterie 21.
L'autre système d'assistance de vol comprend seulement un ensemble d'élévateurs 1A',1B',1C', un ensemble de capteurs 5-1',5-2',5-3' de tension mécanique, et un actionneur 7'.

Certains composants peuvent être mutualisés, le cout du système peut ainsi être diminué.

L'invention concerne également un procédé d'utilisation d'un système d'assistance de vol 40 tel que décrit précédemment,
dans lequel chaque capteur 5-1,5-2,5-3 de tension mécanique est configuré pour mesurer respectivement une tension mécanique dans une suspente primaire 2A-1,2A-2,2A-3 d'un premier élévateur 1A relié à un premier ensemble de suspentes adjacentes à un bord d'attaque 81 d'une aile 80 d'un parapente 100,
et dans lequel l'actionneur 7 est configuré pour exercer une force de traction sur au moins un deuxième élévateur 1C relié à un deuxième ensemble de suspentes, le deuxième ensemble de suspentes étant adjacent au premier ensemble de suspentes.

## Revendications

1. Système d'assistance de vol (40) pour parapente (100), le système d'assistance de vol (40) comportant :
- un ensemble d'élévateurs (1A,1B,1C), chaque élévateur (1A,1B,1C) étant configuré pour être respectivement relié à un ensemble de suspentes primaires (2A-1, 2A-2, 2A-3 ; 2B-1,2B-2,2B-3 ; 3B-1,3B-2,3B-3) d'une aile (80) d'un parapente (100),
- un ensemble de capteurs (5-1,5-2,5-3) de tension mécanique, chaque capteur (5-1,5-2,5-3) de tension mécanique étant configuré pour mesurer respectivement une tension mécanique dans une suspente primaire (2A-1,2A-2,2A-3) d'un premier élévateur (1A),
- un actionneur (7) configuré pour exercer une force de traction sur au moins un deuxième élévateur (1C), le deuxième élévateur (1C) étant distinct du premier élévateur (1A),
- une unité électronique de contrôle (20) configurée pour détecter une perte de tension mécanique dans au moins une suspente primaire de l'ensemble de suspentes primaires (2A-1,2A-2,2A-3) du premier élévateur (1A) et pour commander l'actionneur (7) en réponse à une détection de perte de tension dans ladite au moins une suspente primaire de l'ensemble de suspentes primaires (2A-1, 2A-2, 2A-3) du premier élévateur (1A), de façon à exercer une traction mécanique sur au moins le deuxième élévateur (1C).

2. Système d'assistance de vol (40) selon la revendication 1, dans lequel l'actionneur (7) est un actionneur électrique comprenant :
- un moteur électrique (8) comprenant un arbre de sortie,
- un mécanisme (9) de transformation de mouvement, mécaniquement lié à l'arbre de sortie du moteur électrique (8),
- un câble d'actionnement (10) mécaniquement lié au mécanisme (9) de transformation de mouvement,
le mécanisme (9) de transformation de mouvement étant configuré pour transformer une rotation du moteur électrique (8) en une traction du câble d'actionnement (10).

3. Système d'assistance de vol (40) selon la revendication 1 ou 2, dans lequel :
- chaque capteur (5-1,5-2,5-3) de tension mécanique est un capteur à seulement deux états électriques, et
- l'unité électronique de contrôle (20) est configurée pour détecter une perte de tension mécanique dans la au moins une suspente primaire de l'ensemble de suspentes primaires (2A-1,2A-2,2A-3) du premier élévateur (1A) en réponse à un passage en réponse à un passage du signal du capteur de tension mécanique (5-1) de ladite au moins une suspente primaire d'un premier état électrique (E1) à un deuxième état électrique (E2).

4. Système d'assistance de vol (30) selon l'une des revendications précédentes, dans lequel le capteur de tension mécanique (5-1) comprend :
- une première borne (15) de connexion électrique,
- une deuxième borne (16) de connexion électrique,
- un interrupteur (17) mobile entre :
-- une première position (P1) dit position de fermeture dans laquelle la première borne (15) et la deuxième borne (16) sont reliées électriquement l'une à l'autre, et
-- une deuxième position (P2) dit position d'ouverture dans laquelle la première borne (15) et la deuxième borne (16) sont isolées électriquement l'une de l'autre,
- un organe élastique (18) configuré pour appliquer à l'interrupteur (17) une force de maintien dans la deuxième position (P2),
- un poussoir mobile (19) mécaniquement lié à l'interrupteur (17),
dans lequel le poussoir mobile (19) est configuré pour être en contact avec une suspente primaire (2A-1) du premier élévateur (1A),
et dans lequel le poussoir mobile (19) est configuré pour passer de la deuxième position (P2) à la première position (P1) en réponse à une augmentation de la tension mécanique dans la suspente primaire (2A-1) du premier élévateur (1A).

5. Système d'assistance de vol (40) selon l'une des revendications précédentes, dans lequel l'unité électronique de contrôle (20) est configurée pour maintenir la commande de l'actionneur (7) jusqu'à ce qu'une course maximale de déplacement de l'actionneur (7) soit atteinte, tant qu'une perte de tension est détectée dans ladite au moins une suspente primaire de l'ensemble de suspentes primaires (2A-1, 2A-2, 2A-3) du premier élévateur (1A).

6. Système d'assistance de vol (40) selon la revendication 5, dans lequel l'unité électronique de contrôle (20) est configurée pour désactiver la commande de l'actionneur (7) dès que la course maximale de l'actionneur (7) est atteinte.

7. Système d'assistance de vol (40) selon la revendication 5, dans lequel l'unité électronique de contrôle (20) est configurée pour :
- maintenir la commande de l'actionneur (7) pendant une durée prédéterminée (T1) une fois que la course maximale de l'actionneur (7) est atteinte, et pour :
- désactiver la commande de l'actionneur (7) à l'expiration de la durée prédéterminée (T1).

8. Système d'assistance de vol (40) selon l'une des revendications 5 à 7, dans lequel l'unité électronique de contrôle (20) est configurée pour désactiver la commande de l'actionneur (7) si une tension mécanique est détectée dans chaque suspente primaire (2A-1,2A-2,2A-3) du premier élévateur (1A) et si la course de déplacement de l'actionneur (7) est inférieure à la course maximale de déplacement de l'actionneur (7).

9. Système d'assistance de vol (40) selon l'une des revendications précédentes, comportant un dispositif de mouflage (30), le dispositif de mouflage (30) comportant :
- une première poulie (23) reliée au premier élévateur (1A),
- une deuxième poulie (24) reliée au troisième élévateur (1B),
- une corde (29) reliant un premier point d'attache (25) disposé sur le troisième élévateur (1B) à un deuxième point d'attache (26) disposé sur le deuxième élévateur (1C), dans lequel un chemin de passage de la corde (29) comprend successivement le premier point d'attache (25), la première poulie (23), la deuxième poulie (24), et le deuxième point d'attache (26),
dans lequel le câble d'actionnement (10) relie l'actionneur (7) au deuxième élévateur (1C),
de façon à ce que l'actionneur (7) exerce une traction mécanique conjointement sur le deuxième élévateur (1C) et le troisième élévateur (1B).

10. Système d'assistance de vol (40) selon l'une des revendications précédentes, dans lequel l'unité électronique de contrôle (20) est configurée :
- pour émettre un premier signal d'alerte en réponse à une détection de perte de tension dans ladite au moins une suspente primaire de l'ensemble de suspentes primaires (2A-1, 2A-2, 2A-3) du premier élévateur (1A), et
- pour émettre un deuxième signal d'alerte conjointement à une activation de l'actionneur (7).

11. Système d'assistance de vol (40) selon l'une des revendications précédentes, comportant :
- une batterie (21) de stockage d'énergie électrique, configurée pour fournir une énergie électrique à l'unité électronique de contrôle (20) et au moteur électrique (8) de l'actionneur (7),
- un boitier de réception (22) configuré pour recevoir la batterie (21), l'actionneur (7) et l'unité électronique de contrôle (20),
dans lequel le boitier de réception (22) est configuré pour être fixé à la sellette (70).

12. Ensemble (90), comportant :
- une sellette (70),
- un premier système d'assistance de vol (40) selon l'une des revendications précédentes,
- un deuxième système d'assistance de vol (40') selon l'une des revendications précédentes.

13. Parapente (100), comprenant :
- une aile (80) comportant un bord d'attaque (81) et un bord de fuite (82),
- une sellette (70),
- un système d'assistance de vol (40) selon l'une des revendications 1 à 11,
dans lequel :
- chaque élévateur de l'ensemble d'élévateurs (1A,1B,1C) du système d'assistance de vol (40) relie la sellette (70) à l'aile (80),
- chaque capteur (5-1,5-2,5-3) de l'ensemble de capteurs (5-1,5-2,5-3) de tension mécanique est configuré pour mesurer une tension mécanique dans une suspente primaire (2A-1,2A-2,2A-3) adjacente au bord d'attaque (81) de l'aile (80), et
- l'actionneur (7) est configuré pour exercer une force de traction sur l'élévateur (1C) relié aux suspentes primaires (2C-1,2C-2,2C-3) adjacentes au bord de fuite (82) de l'aile (80).

14. Parapente (100) selon la revendication précédente, comprenant un deuxième système d'assistance de vol (40') selon l'une des revendications 1 à 12, le deuxième système d'assistance de vol (40') comportant un deuxième ensemble d'élévateurs (1A',1B',1C'), un deuxième ensemble de capteurs (5-1',5-2',5-3') de tension mécanique, un deuxième actionneur (7'), parapente (100) dans lequel :
- chaque élévateur du deuxième ensemble d'élévateurs (1A',1B',1C') du deuxième système d'assistance de vol (40') relie la sellette (70) à l'aile (80),
- chaque capteur (5-1',5-2',5-3') du deuxième ensemble de capteurs (5-1',5-2',5-3') de tension mécanique est configuré pour mesurer une tension mécanique dans une suspente primaire (2A-1',2A-2',2A-3') adjacente au bord d'attaque (81) de l'aile (80), et
- le deuxième actionneur (7') est configuré pour exercer une force de traction sur l'élévateur (1C') relié aux suspentes primaires (2C-1',2C-2',2C-3') adjacentes au bord de fuite (82) de l'aile (80).

15. Procédé d'utilisation d'un système d'assistance de vol (40) selon l'une des revendications 1 à 11 ou d'un ensemble (90) selon la revendication 12,
dans lequel chaque capteur (5-1,5-2,5-3) de tension mécanique est configuré pour mesurer respectivement une tension mécanique dans une suspente primaire (2A-1,2A-2,2A-3) d'un premier élévateur (1A) relié à un premier ensemble de suspentes adjacentes à un bord d'attaque (81) d'une aile (80) d'un parapente (100),
et dans lequel l'actionneur (7) est configuré pour exercer une force de traction sur au moins un deuxième élévateur (1C) relié à un deuxième ensemble de suspentes, le deuxième ensemble de suspentes étant adjacent au premier ensemble de suspentes.
